# EUROPÄISCHE PATENTSCHRIFT

(11) **EP 1 505 085 B1**
(45) Veröffentlichungstag und Bekanntmachung des Hinweises auf die Patenterteilung: **31.12.2008**
(21) Anmeldenummer: 04014557.5
(22) Anmeldetag: 22.06.2004
(51) Int. Cl.: C08F 8/30, C08K 5/21, C09J 131/04

(54) **Wasserresistente Klebstoffe, Verfahren zu deren Herstellung und deren Verwendung**
Water resistant adhesives, process for their manufacture and use thereof
Adhésifs résistant à l'eau, leur procédé de fabrication et leur utilisation

(30) Priorität: 04.08.2003 DE 10335673
(43) Veröffentlichungstag der Anmeldung: 09.02.2005
(73) Patentinhaber: Celanese Emulsions GmbH, 61476 Kronberg/Ts. (DE)
(72) Erfinder: Jakob, Martin, Dr., 65779 Kelkheim (DE); Prass, Werner, Dr., 55130 Mainz (DE)
(74) Vertreter: Ackermann, Joachim

(56) Entgegenhaltungen:
- EP-A- 0 143 175
- WO-A-01/49788
- WO-A-03/059964
- DE-A- 4 240 731
- FR-A- 2 288 773
- GB-A- 928 326
- US-A- 4 442 257
- US-A- 4 728 680

## Beschreibung

Die vorliegende Erfindung betrifft wässrige Dispersionsklebstoffe auf Basis einer Kunststoffdispersion mit hoher Nassklebefestigkeit, die Herstellung dieser Dispersionsklebstoffe sowie deren Verwendung zum Verkleben von Holz und anderen Substraten, insbesondere von porösen oder semiporösen Substraten.

Kunststoffdispersionen, insbesondere auf Basis von Polyvinylestern, wie Polyvinylacetat, werden als Weißleime in großem Umfange zum industriellen Verleimen von Holz und anderen porösen oder semiporösen Substraten verwendet. Wird für die Klebverbindung nach der Applikation eine Wasserbelastung erwartet, sind diese Produkte auch wasserfest ausrüstbar, sei es durch Verwendung spezieller vernetzbarer oder selbstvernetzender Comonomere während deren Herstellung durch Emulsionspolymerisation und/oder einer nachträglichen Additivierung durch spezielle Vernetzer, häufig in Form von Vernetzerharzen in Kombination mit Vernetzungskatalysatoren. Die Wirkungsweise besteht in einer Anbindung des häufig zur kolloidalen Stabilisierung verwendeten hydrophilen Schutzkolloids, beispielsweise von Polyvinylalkohol.

Auf diese Weise werden Spezialprodukte erhalten, die den Anforderungen einschlägiger Normen, wie beispielsweise der DIN EN 204 genügen.

Kaltwasserbeständige Klebstoffe, beispielsweise für die Küchenmöbelmontage, müssen dabei mindestens die Beanspruchungsgruppe D3 (Nass-Klebfestigkeit ≥ 2 N/mm² nach Prüffolge D3/3 mit 4-tägiger Kaltwasser-Lagerung) erfüllen. Bei Außenanwendungen oder beispielsweise im Fensterbau bei der Herstellung von Fensterkanteln, werden im EU-Raum kochwasserbeständige Klebstoffe der Beanspruchungsgruppe D4 (Nassklebfestigkeit ≥ 4 N/mm² nach Prüffolge D4/5 mit 6-stündiger Lagerung in kochendem Wasser und zweistündiger Lagerung in Kaltwasser) verwendet.

Auch im Do-it-yourself-Bereich (z. B. in der Parkettverleimung) gehören wasserfeste Holzklebstoffe auf Dispersionsbasis, insbesondere häufig schon auf Basis der Qualitätsstufe D3, mittlerweile zu den Gegenständen des täglichen Bedarfs. Wegen der unter Umständen stark verlängerten Vertriebszeiten durch Lagerhaltung in Baumärkten und beim Endverbraucher besteht hier die Anforderung an eine lange Standzeit der Produkte, innerhalb der die Dispersionen keine Qualitätseinbußen erleiden und auch nicht zu stark in der Viskosität ansteigen dürfen. Die qualitativen Anforderungen der Kunden umfassen ferner, dass einschlägige Prüfnormen wie EN 204 / D3 nicht nur erfüllt, sondern deutlich überschritten werden, vorzugsweise um 50 % auf über ≥ 3 N/mm².

Ein weitere Forderung betrifft insbesondere im mittel- und nordeuropäischen Raum niedrige VOC-Gehalte (VOC = Volatile Organic Compounds). Hier ist an erster Stelle ein niedriger Gehalt an Formaldehyd zu nennen, der über die selbstvernetzenden Comonomere oder insbesondere externe Vernetzerharze, wie z. B. beschrieben in DE-B-22 61 402, in die Dispersionen eingetragen wird.

EP 0 143 175 A1 beschreibt Formaldehydfreie wässrige Kunststoffdispersionen auf Basis eines vernetzbaren Polymerisats. Diese Kunststoffdispersionen enthalten Polymerisate aus ethylenisch ungesättigten Monomeren mit einem Gehalt an N-Methylolamid- und/oder an N-Methyloletheramidgruppen und zusätzlich ausgewählte zyklische Harnstoffderivate. Letztere wirken als Formaldehydfänger und nicht als Vernetzer. Dieses Dokument gibt keinen Hinweis auf den Einsatz von ausgewählten und niedermolekularen Vernetzern mit (teil)veretherten N-Methylolgruppen.

Einen zusätzlichen Aspekt stellt der am Markt seit Jahren stattfindende Preisverfall bei Rohklebstoffen dar (d. h. Dispersionen, die von den Klebrohstoff-Herstellern an die Klebstoffindustrie zur Konfektionierung geliefert werden). Dieser Trend zwingt die Hersteller dieser Vorstufen zur verstärkten Kosteneinsparung durch Mengen- oder Kostenverringerung von Ausgangsprodukten und/oder weniger fehlerbehafteten Herstellungsverfahren.

Kunststoffdispersionen auf Basis von Polyvinylestern, insbesondere Polyvinylacetat, welche durch wässrige Emulsionspolymerisation von Vinylacetat in Gegenwart von polymeren Stabilisatoren (Schutzkolloiden) hergestellt werden, stellen ein Massenprodukt dar. Übersichten über die Herstellung und Applikation von Polyvinylacetat-Dispersionen finden sich an zahlreichen Stellen in der Literatur, so beispielsweise im Handbook of Adhesives (I. Skeist, Ed.), 3. Auflage, Kapitel 21.

Dort steht auch beschrieben, dass beispielsweise das Comonomer N-Methylolacrylamid zur Herstellung selbstvernetzender Vinylacetat-Polymere weit verbreitet ist. Wegen des günstigen Rohstoffpreises, der hohen Verfügbarkeit und der relativ guten Effekte wird auf dieses Monomer gegenwärtig im Niedrigkostensegment der kaltwasserbeständigen D3-Klebstoffe immer noch zugegriffen.

Die Patentliteratur, betreffend selbstvernetzende Kunststoffdispersionen, insbesondere Polyvinylesterdispersionen mit Methylolmonomeren, beispielsweise N-Methylol(meth)acrylamid, ist im Klebstoffbereich erwartungsgemäß relativ umfangreich.

Gegenstand der hier beispielhaft zitierten Schriften DE-C 26 20 738, DE-A-39 42 628, EP-B-826,008 und EP-A-1,170,311 sind sauer katalysiert vernetzende Klebstoffsysteme auf Basis von Copolymerisaten von Vinylestern mit vernetzbaren Comonomeren, darunter N-Methylolacrylamid. Diese Klebemittel ergeben gemäß der Offenbarung in den Ausführungsbeispielen normgerechte Verklebungen der Stufe EN 204/D3 (bzw. vormals der DIN 68602/B3) mit Klebefestigkeiten von > 2 N/mm² in Kombination mit wasserlöslichen starken Säuren oder deren Metallsalzen, insbesondere von Salzen des Cr(III), AI(III), Fe(III) und Zr(IV).

Die Verwendung dieser vernetzbaren Monomeren birgt im großtechnischen Einsatz oftmals gravierende Probleme durch ihre Empfindlichkeit bei der technischen Handhabung, beispielsweise vorzeitiger Homopolymerisation in der handelsüblichen wässrigen Lösung. Eine sorgfältige Temperaturführung bei der Emulsionspolymerisation ist nötig zur Vermeidung einer thermisch induzierten vorzeitigen Vernetzung. Die Viskosität der Endprodukte unterliegt ebenfalls größeren Schwankungen. Bei Verwendung größerer Mengen nimmt die Lagerstabilität der sauer konfektionierten Endprodukte außerdem stark ab. Darüber hinaus wird auch überdie N-Methylolmonomere ein gewisser Anteil an freiem Formaldehyd in die Dispersion eingetragen, der als technische Verunreinigung vorliegt.

Vorschläge, den Gehalt an diesen Comonomeren ganz oder zumindest partiell zugunsten anderer Systeme zu substituieren, findet man in den oben zitierten Schriften nicht.

Es ist weiterhin bekannt, anstelle von N-Methylolmonomeren deren mit C₁-C₆-Alkanolen veretherte, und damit weniger empfindlichen Derivate einzusetzen, jedoch sind mit diesen N-Alkoxymethyl(meth)acrylamiden aufgrund deren geringeren Reaktivitäten nicht die erwünschten Effekte zu erzielen. Darüberhinaus führen die höheren Preise für diese Produkte zu einer merklichen Verteuerung der Klebstoffe.

Auch ist es, wie oben erwähnt, bekannt, den Dispersionen nachträglich verschiedene Additive und externe Vernetzerharze zuzusetzen, die den Klebverbindungen aus diesen Klebstoffen Wasserfestigkeit verleihen, beziehungsweise noch weiter verbessern. Diese Zusätze können natürlich auch in Kombination mit den oben beschriebenen, N-Methylolmonomeren enthaltenden Produkten, eingesetzt werden.

Als reaktive Additive oder Dispersionsbestandteile werden am Markt in großem Umfange maskierte Polyisocyanate (wie beschrieben in EP-A-206,059) oder maskierte polyfunktionelle Aldehyde (wie beschrieben in EP-B-686,682) eingesetzt, die beide außerordentlich hohe Klebfestigkeiten bis zur kochwasserfesten Beanspruchungsgruppe D4 ermöglichen. Die Klebstoffe enthalten dadurch nur wenig oder gar keinen Formaldehyd, beziehungsweise es wird kein zusätzlicher Formaldehyd in die Produkte eingetragen, jedoch sind aufgrund der hohen Reaktivität nur kurze Standzeiten der Klebstoffe möglich, so dass die Produkte als Einkomponentensysteme im Do-it-yourself-Bereich nicht in Frage kommen.

Die Verbesserung der Nass-Klebfestigkeiten von bereits Methylolmonomere enthaltenden Emulsionspolymerisaten durch Harzzusätze ist ebenfalls Stand der Technik. Beispielhaft genannt sei EP-B-623,661, welche als Zusatz zu diesen Dispersionen Formaldehydharze aus der Gruppe der Resorcinol-Formaldehydharze, Harnstoff-Formaldehydharze, Melamin-Formaldehydharze und Phenol-Formaldehydharze vorschlagen. Nachteilig ist bei diesen Systemen entweder die hohe Reaktivität, die keine längeren Standzeiten ermöglicht, der Eintrag von freiem Formaldehyd, oder bei Formaldehyd-reduzierten Spezialprodukten aus dieser Gruppe eine immer noch vorhandene Restkonzentration an Formaldehyd bei jedoch verringerter Reaktivität und einem höheren Preis.

Eine weitere Gruppe von Harzen zur Additivierung von Polyvinylacetat-basierten Dispersionen stellen spezielle N-Hydroxymethyl-reaktive Harze dar, die entweder für sich oder in Kombination mit weiteren Harzen eingesetzt werden können. Die GB-A-1,204,818 nennt Polyalkoxyalkyl- und Polyalkanoldiazine, -triazine und -tetrazine, Imidazolidinone und Thioimidazolidinone. Spezifische in der Schrift genannte Beispiele sind Tetrabutoxymethylbenzoguanamin und 1,3-Dihydroxyrriethyl-4,5-dihydroxy-2-imidazolidinon. Letzteres ist auch als Dimethyloldihydroxyethylenharnstoff (DMDHEU) bekannt und wird als Textilausrüstungsmittel verwendet. Hinweise auf die Verwendung in Dispersionen mit radikalisch einpolymerisierten Monomeren, welche N-Methylolgruppen besitzen, finden sich nicht.

Vernetzerharztypen, die zu den oben genannten Gruppen von Harzen strukturell verwandt bzw. identisch sind, nennt die WO-A-01/49788 (entsprechend EP-A-1,246,868) mit Hydroxymethyl-substituierten Imidazolidinonen, wie dem 1,3-Dimethylol-4,5-dihydroxyimidazolidinon (4,5-Dihydroxy-N,N'dimethylolethylenhamstoff), hydroxymethyl-substituierten Pyrimidinonen oder hydroxymethyl-substituierten Triazinonen oder deren Selbstkondensationsprodukten oder gemischten Kondensaten aus zwei oder mehr der genannten Verbindungen, oder ein Gemisch aus zwei oder mehr der genannten Verbindungen. In einer bevorzugten Ausführungsform enthält die Polymerdispersion ein Vernetzerharz auf Basis von 1,3-Dimethylol-dihydroxyimidazolidinon (4,5-Dihydroxy-N,N'dimethylolethylen-harnstoff) entweder in Form der reinen Verbindungen, deren Selbstkondensations-produkte oder deren Gemisch. Nachteilig ist auch hier, dass diese Verbindungen mit bis zu 1,1 Gew. % einen beträchtlichen Eigenanteil an Formaldehyd aufweisen. Des weiteren weisen diese Verbindungen keinen prinzipiellen Vorteil gegenüber der Verwendung von einpolymerisierbaren Methylolmonomeren zur Erzeugung eines D3-Klebstoffes auf und besitzen außerdem eine sehr hohe Reaktivität.

Keine der erwähnten Veröffentlichungen gibt Hinweise darauf, welche Maßnahmen für die gewünschte Reduktion des Gehalts an N-Methylolgruppen in einer wasserresistent ausgerüsteten Klebstoffformulierung zu treffen sind, ohne dass das von Kundenseite hoch angesetzte Profil der Nassklebefestigkeit, insbesondere nach DIN EN 204 D3, Einbußen erleidet.

Es bestand demnach die Aufgabe, einen wasserresistenten Klebstoff bereitzustellen, der gegenüber den konventionellen Klebstoffen, welche polymergebundene, N-Methylolgruppen enthaltende Kunststoffdispersionen aufweisen, bei zumindest gleichen oder verbesserten Nass-Klebeigenschaften, vorzugsweise der Beanspruchungsgruppe DIN EN 204/D3, einen verringerten Anteil an einpolymerisierbaren N-Methylolgruppen aufweist.

Gelöst wird diese Aufgabe durch den nachstehend beschriebenen Dispersionsklebstoff.

Gegenstand der vorliegenden Erfindung ist ein wässriger Dispersionsklebstoff auf Basis einer Kunststoffdispersion, vorzugsweise mit einem pH-Wert zwischen 2 und 6, enthaltend mindestens ein Emulsionspolymerisat mit vernetzbaren N-Methylolgruppen, abgeleitet durch den Einbau von bis zu 2,0 Gew. %, vorzugsweise 0,01 bis 1,5 Gew. %, insbesondere 0,05 bis 0,8 Gew. %, bezogen auf die Gesamtmonomermenge, an N-Methylolgruppenhaltigen Comonomeren in das Emulsionspolymerisat, mindestens ein Schutzkolloid, sowie mindestens ein Vernetzungsmittel enthaltend teilweise oder vollständig mit einem oder mehreren Alkanolen veretherte N-Methylolgruppen und/oder teilweise oder vollständig mit einem oder mehreren Alkanolen veretherte andere Hydroxylgruppen, das ausgewählt wird aus der Gruppe bestehend aus hydroxymethylierten cyclischen Ethylenharnstoffen, hydroxymethylierten cyclischen Propylenharnstoffen, hydroxymethylierten bicyclischen Glyoxaldiharnstoffen, hydroxymethylierten bicyclischen Malondialdehyddiharnstoffen oder deren Kombinationen.

Eine Gruppe von Emulsionspolymerisaten als Basis für die erfindungsgemäßen Dispersionsklebstoffe bilden die mittels radikalischer Emulsionspolymerisation hergestellten Copolymerisate, die überwiegend auf Basis von Vinylestern als Hauptmonomerbasis aufgebaut sind und die zumindest Comonomere mit vernetzbaren N-Methylolgruppen aufweisen.

Als Vinylester-Hauptmonomere kommen vorzugsweise Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis 11 Kohlenstoffatomen im Säurerest, Vinylester von längerkettigen gesättigten oder ungesättigten Fettsäuren, wie beispielsweise Vinyllaurat oder Vinylstearat, sowie Vinylester der Benzoesäure und substituierter Derivate der Benzoesäure, wie Vinyl-p-tert.-butylbenzoat, in Frage. Unter diesen ist jedoch Vinylacetat besonders bevorzugt.

Die genannten Vinylester können im Polyvinylester einzeln verwendet werden oder auch im Gemisch in einem Copolymer nebeneinander vorliegen. Der Anteil der Vinylester aus dieser Gruppe an der Gesamtmonomermenge im Copolymerisat beträgt üblicherweise mindestens 50 Gew.-%, vorzugsweise mindestens 75 Gew.-%.

Das erfindungsgemäß eingesetzte Emulsionspolymerisat weist vernetzbare N-Methylolgruppen auf, die durch die Copolymerisation mit N-Methylolgruppenhaltigen Comonomeren eingeführt werden. Bevorzugte Beispiele dafür sind N-Methylolacrylamid, N-Methylolmethacrylamid, N-Methylolallylcarbamat, N-Methylolmaleamid, N-Methylol-maleamsäure, sowie die N-Methylolamide aromatischer Vinylcarbonsäuren, wie beispielsweise N-Methylol-p-vinylbenzamid. Die N-Methylolamide der Acrylsäure und Methacrylsäure sind im Falle der Verwendung der erfindungsgemäßen wässrigen Dispersionsklebstoffe als wasserresistente Klebstoffe besonders bevorzugt. Der Anteil dieser Comonomeren an der Gesamtmonomermenge beträgt bis zu 2,0 Gew.-%, vorzugsweise 0,01 bis 1,5 Gew.-%, insbesondere 0,05 bis 1 Gew.-%.

Weitere zur Herstellung der erfindungsgemäß eingesetzten Emulsionspolymerisate besonders geeignete Comonomere sind stickstoffhaltige mit Vinylestern polymerisierbare Comonomere mit N-funktionellen Gruppen, ausgenommen die oben erwähnten N-Methylolgruppen enthaltenden Monomere. Dazu zählen insbesondere N-Ethanol(meth)acrylamid, N-Propanol(meth)acrylamid, (Meth)acrylamid, Allylcarbamat, Acrylnitril, die N-Methylolester, -alkylether oder Mannichbasen des N-Methylol(meth)acrylamids oder N-Methylolallylcarbamats, Acrylamidoglykolsäure und/oder deren Salze, Acrylamidomethoxyessigsäuremethylester, N-(2,2-Dimethoxy-1-hydroxyethyl)acrylamid, N-Dimethylaminopropyl(meth)acrylamid, N-Methyl(meth)acrylamid, N-Butyl(meth)acrylamid, N-Cyclohexyl(meth)acrylamid, N-Dodecyl(meth)acrylamid, N-Benzyl(meth)acrylamid, p-Hydroxyphenyl(meth)acrylamid, N-(3-Hydroxy-2,2-dimethylpropyl)methacrylamid, Ethylimidazolidonmethacrylat, N-Vinylformamid, N-Vinylpyrrolidon. Der Anteil dieser Comonomeren an der Gesamtmonomermenge beträgt, falls vorhanden, üblicherweise bis zu 15 Gew. %, vorzugsweise bis zu 10 Gew. %.

Weitere zur Herstellung der erfindungsgemäß eingesetzten Emulsionspolymerisate besonders geeignete ethylenisch ungesättigte Comonomere, die mit den Vinylestern copolymerisiert werden können, sind α,β-ungesättigte Säuren, beispielsweise Acrylsäure, Methacrylsäure, sowie deren Ester mit primären und sekundären gesättigten einwertigen Alkoholen mit 1 bis 32 Kohlenstoffatomen, beispielsweise Methanol, Ethanol, Propanol, Butanol, 2-Ethylhexylalkohol, cycloaliphatischen oder polycyclischen Alkoholen sowie längerkettigen Fettalkoholen. Weiterhin können α,β-ungesättigte Dicarbonsäuren, beispielsweise Maleinsäure, Fumarsäure, Itaconsäure oder Citraconsäure, sowie deren Mono- oder Diester mit gesättigten einwertigen aliphatischen Alkoholen mit 1 bis 28 Kohlenstoffatomen mitverwendet werden. Der Anteil dieser Comonomeren an der Gesamtmonomermenge beträgt, falls vorhanden, üblicherweise bis zu 25 Gew. %, vorzugsweise bis zu 15 Gew. %.

Weitere zur Herstellung der erfindungsgemäß eingesetzten Emulsionspolymerisate besonders geeignete Comonomere sind ethylenisch ungesättigte Kohlenwasserstoffe, wie Ethylen oder α-Olefine mit 3-28 Kohlenstoffatomen, beispielsweise Propylen und/oder Butylen, oder vinylaromatische Kohlenwasserstoffe, wie Styrol, Vinyltoluol und/oder Vinylxylol, sowie halogenierte ungesättigte aliphatische Kohlenwasserstoffe, beispielsweise Vinylchlorid, Vinylfluorid, Vinylidenchlorid und/oder Vinylidenfluorid. Der Anteil dieser Comonomere an der Gesamtmonomermenge beträgt, falls vorhanden, üblicherweise bis zu 50 Gew. %, vorzugsweise bis zu 25 Gew. %.

Weitere zur Herstellung der erfindungsgemäß eingesetzten Emulsions-polymerisate besonders geeignete Comonomere sind mehrfach ethylenisch ungesättigte, und damit vernetzend wirkende Comonomere, beispielsweise Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl(meth)-acrylat, Vinylcrotonat, Methylenbisacrylamid, Hexandioldiacrylat, Pentaerythroldiacrylat und Trimethylolpropantriacrylat oder es können Gemische von zwei oder mehr von Verbindungen aus dieser Gruppe im Polymerisat enthalten sein. Der Anteil dieser Comonomere an der Gesamtmonomermenge beträgt, falls vorhanden, üblicherweise bis zu 10 Gew.-%, vorzugsweise bis zu 2 Gew. %.

Weitere zur Herstellung der erfindungsgemäß eingesetzten Emulsions-polymerisate besonders geeignete Comonomere sind hydroxyfunktionelle Ester ungesättigter Carbonsäuren, wie Hydroxyethyl(meth)acrylat, Hydroxypropyl(meth)acrylat sowie deren Addukte mit Ethylenoxid oder Propylenoxid. Der Anteil dieser Comonomeren an der Gesamtmonomermenge beträgt, falls vorhanden, üblicherweise bis zu 25 Gew.-%, vorzugsweise bis zu 15 Gew.-%.

Weitere zur Herstellung der erfindungsgemäß eingesetzten Emulsions-polymerisate besonders geeignete Comonomere sind über Carbonylgruppen vernetzbare oder selbstvernetzende Comonomere aus der Gruppe Diacetonacrylamid, Allylacetoacetat, Vinylacetoacetat sowie Acetoacetoxyethyl(meth)acrylat. Der Anteil dieser Comonomere an der Gesamtmonomermenge beträgt, falls vorhanden, üblicherweise bis zu 10 Gew.-%, vorzugsweise bis zu 5 Gew.-%.

Als eine weitere Gruppe von Comonomeren eignen sich Monomere aus der Gruppe der ungesättigten Sulfonsäuren bzw. deren Salze, vorzugsweise Vinylsulfonsäure, 2-Acrylamido-2-methyl-propansulfonsäure, der epoxidfunktionellen Comonomeren, wie Glycidylmethacrylat und Glycidylacrylat, sowie der siliciumfunktionellen Comonomeren, wie Acryloyloxypropyltri(alkoxy)- und Methacryloyloxypropyltri(alkoxy)-Silane, Vinyltrialkoxysilane und Vinylmethyl-dialkoxysilane, wobei als Alkoxygruppen beispielsweise Ethoxy- und Ethoxypropylenglykolether-Reste enthalten sein können. Der Anteil dieser Comonomere an der Gesamtmonomermenge beträgt, falls vorhanden, üblicherweise bis zu 10 Gew.-%, vorzugsweise bis zu 5 Gew.-%.

Der Anteil der neben den Vinylestereinheiten im Copolymerisat enthaltenen Comonomereinheiten kann zusammengenommen bis zu 50 Gew.-% betragen.

Als eine weitere Gruppe von Emulsionspolymerisaten für die Kunststoffdispersion, welches als Polymerbasis in den erfindungsgemäßen Dispersionsklebstoffen eingesetzt werden kann, kommen mittels radikalischer Emulsionspolymerisation hergestellte Copolymere abgeleitet von Vinylaromaten und 1,3-Dienen in Frage, die darüber hinaus mit vernetzbaren N-Methylolgruppen enthaltenden Monomeren modifiziert sind.

Geeignete Vinylaromaten sind Styrol, α-Methylstyrol, Vinyltoluol und/oder Vinylxylol. Vorzugsweise wird Styrol copolymerisiert. Beispiele für 1,3-Diene sind 1,3-Butadien und Isopren. Bevorzugt wird hierbei 1,3-Butadien verwendet. Der Anteil von Vinylaromaten und 1,3-Dienen an der Gesamtmonomermenge beträgt mindestens 50 Gew.-%.

Auch dieses Emulsionspolymerisat enthält vernetzbare N-Methylolgruppen, abgeleitet von Comonomeren, wie beispielsweise N-Methylolacrylamid. Ebenfalls geeignet sind die oben aufgeführten verwandten N-Methylol-Verbindungen. Der Anteil dieser Comonomere an der Gesamtmonomermenge beträgt auch in diesem Polymeren bis zu 2,0 Gew. %, vorzugsweise 0,01 bis 1,5 Gew. %, und insbesondere 0,05 bis 1 Gew. %.

Diese Copolymeren können neben den Vinylaromaten und 1,3-Dienen ebenfalls weitere Comonomereinheiten der vorgenannten Gruppen (mit Ausnahme der bereits erwähnten Vinylaromaten) enthalten, wobei die Gesamtmenge der weiteren Comonomereinheiten zusammengenommen ebenfalls bis zu 50 Gew. % beträgt.

Die Kunststoffdispersion enthält als Stabilisator mindestens ein Schutzkolloid.

Als Schutzkolloid beispielsweise geeignet ist Polyvinylalkohol, insbesondere Polyvinylalkohol vom Hydrolysegrad 60-100 Mol.-%, vorzugsweise 70 bis 98 Mol.-%, und Viskositäten der 4 Gew.-%igen wäßrigen Lösungen bei 20 °C von 2 bis 70 mPa*s. Geeignet sind auch funktionelle Polyvinylalkohole wie die formalen Copolymere des Vinylalkohols und gegebenenfalls Vinylacetats mit Ethen, mit Vinylacetoacetat oder Isopropenylalkohol oder solche mit Carboxylgruppen oder Alkoxysilangruppen.

Weiterhin können als Schutzkolloide veretherte Cellulosederivate, beispielsweise Hydroxyethylcellulose, Hydroxypropylcellulose oder Carboxymethylcellulose, eingesetzt werden. Diese können entweder alleine oder in Kombination mit Polyvinylalkohol verwendet werden. Ebenfalls geeignet sind Polyvinylpyrrolidon, Polycarbonsäuren wie Polyacrylsäure sowie Copolymere der Maleinsäure oder des Maleinsäureanhydrids mit ethylenisch ungesättigten Verbindungen wie Methylvinylether oder Styrol. Weiterhin geeignet sind Polyalkylenglykole oder die Alkalimetallsalze von Polyacrylsäuren und Polymethacrylsäuren, Stärke- und Gelatinederivate, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinyl-imidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate.

Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420. Bevorzugt ist die überwiegende Verwendung von Polyvinylalkohol. Bezogen auf die Gesamtmenge der Monomere, beträgt der Anteil der Schutzkolloide vorzugsweise 1 bis 20 Gew.-%, insbesondere 2 bis 14 Gew.-%

Zusätzlich zu den Schutzkolloiden können nichtionische und/oder ionische Emulgatoren in der erfindungsgemäß eingesetzten Kunststoffdispersion als zusätzliche Stabilisierungsmittel mitverwendet werden. Falls vorhanden liegen diese typischerweise in Mengen bis zu 2 Gew. %, bezogen auf die Gesamtmenge der Monomere, vor. Zu diesem Zwecke geeignete Verbindungen finden sich in dem Fachmann bekannten, einschlägigen Zusammenstellungen wie beispielsweise der Surfactant Applications Directory (D.R. Karsa et al., Ed., Blackie, London 1991) oder in Houben-Weyl, Methoden der organischen Chemie, Band XIV/1, Makromolekulare Stoffe, Georg-Thieme-Verlag, Stuttgart, 1961, Seiten 190 bis 208.

Die erfindungsgemäße wässrige Dispersionsklebstoff enthält mindestens ein Vernetzungsmittel enthaltend teilweise oder vollständig mit ein oder mehreren Alkanolen veretherte N-Methylolgruppen und/oder teilweise oder vollständig mit ein oder mehreren Alkanolen veretherte andere Hydroxylgruppen und das ausgewählt wird aus der Gruppe bestehend aus hydroxymethylierten cyclischen Ethylenharnstoffen, hydroxymethylierten cyclischen Propylenharnstoffen, hydroxymethylierten bicyclischen Glyoxaldiharnstoffen, hydroxymethylierten bicyclischen Malondialdehyddiharnstoffen oder deren Kombinationen.

Bei den zur Veretherung eingesetzten Alkanolen handelt es sich um ein- oder mehrwertige Alkohole, die primäre, sekundäre und/oder tertiäre Alkoholgruppen aufweisen. Vorzugsweise handelt es sich um ein- oder um zweiwertige Alkohole mit sekundären und/oder insbesondere primären Alkoholgruppen.

Bevorzugt werden mit C₁ bis C₄₀-Alkanolen, die gegebenenfalls ein oder mehrere Sauerstoffatome in der Kette aufweisen können, teil- oder vollständig veretherte, insbesondere mit unterschiedlichen C₁ bis C₄₀-Alkanolen, die gegebenenfalls ein oder mehrere Sauerstoffatome in der Kette aufweisen können, teil- oder vollständig veretherte Vernetzungsmittel eingesetzt.

Bevorzugte erfindungsgemäß eingesetzte zumindest teilveretherte Derivate sind Verbindungen der nachfolgend aufgeführten Gruppen la bis ld, bei der mindestens eine am Ring befindliche OH-Gruppe oder Methylolgruppe wie unten erläutert, verethert wurde.

Besonders geeignet sind zyklische Ethylenharnstoffe der allgemeinen Formel la, 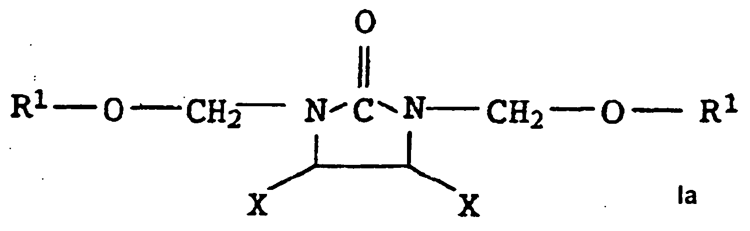 in der die Reste X verschieden oder vorzugsweise gleich sind und für Wasserstoff, Hydroxylgruppen oder C₁-C₄-Alkoxygruppen, beispielsweise Methoxy oder Ethoxy, stehen, und/oder
cyclische Propylenharnstoffe der allgemeinen Formel lb, 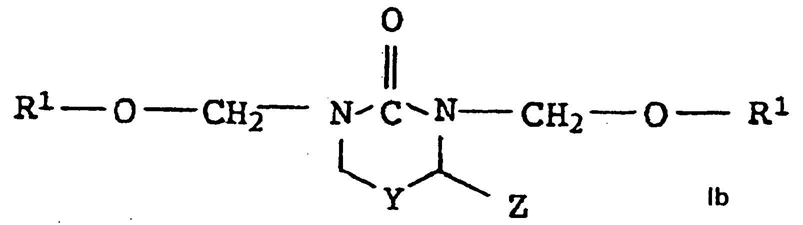 in der Y für CH₂, CHOH, C(CH₃)₂, ein O-Atom oder ein eine C₁-C₄-Alkylgruppe tragendes N-Atom steht und Z Wasserstoff oder eine C₁-C₄-Alkoxygruppe, beispielsweise Methoxy oder Ethoxy, bezeichnet, und/oder
bicyclische Glyoxaldiharnstoffe der allgemeinen Formel lc, 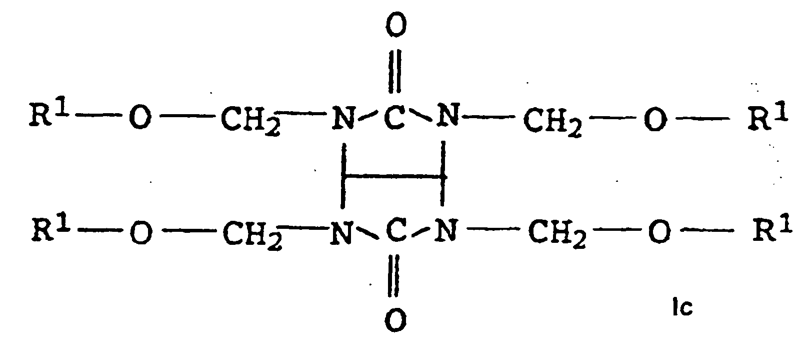 und/oder
bicyclische Malondialdehyddiharnstoffe der allgemeinen Formel ld, 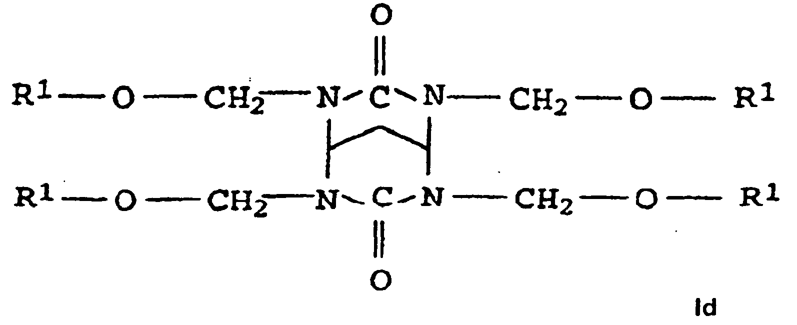 worin für alle Formeln Ia bis Id der Rest R¹ gleich oder verschieden sein kann und entweder für Wasserstoff oder für eine gegebenenfalls durch nicht benachbarte Sauerstoffatome unterbrochene und gegebenenfalls mit ein oder mehreren Hydroxylgruppen substituierte C₁-C₁₀-Alkylgruppe, wie -CH₂CH₂OCH₃, -CH₂CH₂OCH₂CH₃ oder -CH₂CH₂OCH₂CH₂OCH₃ steht.

Als weitere Beispiele für R¹ sind zu nennen: n-Butyl, iso-Butyl, sec.-Butyl, tert.-Butyl, n-Pentyl, n-Hexyl, 2-Ethylhexyl und 2-Methoxyethyl; von besonderem Interesse sind die C₁-C₃-Alkylgruppen Ethyl, n-Propyl, iso-Propyl und insbesondere Methyl. Weiterhin von Interesse sind solche Alkylgruppen und durch Sauerstoffatome unterbrochene Alkylgruppen, die ein, zwei, drei oder noch mehr Hydroxylgruppen tragen.

Ganz besonders als Additiv für den erfindungsgemäßen Dispersionsklebstoff geeignet sind die zumindest teilveretherten Derivate von 1,3-Dimethylol-4,5-dihydroxyethylenharnstoff (DMDHEU), bei denen beide Stickstoffatome des Imidazolidinon-Ringes symmetrisch oder insbesondere unsymmetrisch substituiert (verethert) sind.

Vorzugsweise ist die eine der beiden Methylolgruppen des DMDHEU mit einem Methylrest verethert, während die andere Methylolgruppe durch Umsetzung mit einem Polyol, ausgewählt aus der Gruppe, umfassend Ethylenglykol, Diethylenglykol, 1,2- und 1,3-Propylenglykol, 1,2-, 1,3- und 1,4-Butylenglykol, Glycerol und Polyethylenglykolen der Formel HO(CH₂CH₂O)ₙH mit 3 <= n <= 20, bevorzugt Diethylenglykol, derivatisiert ist. Derartige unsymmetrisch substituierte DMDHEU sind beispielsweise in der WO-A-98/29,393 beschrieben.

Die Vernetzungsmittel werden üblicherweise zu 0,001 bis 4 Gew.-%, vorzugsweise von 0,01 bis 2 Gew. %, bezogen auf den Feststoffgehalt des Emulsionspolymerisats, eingesetzt.

Geeignete Verbindungen aus dieser Gruppe sind beispielsweise unter dem Markennamen ®Arkofix der Firma Clariant GmbH im Handel erhältlich. Unter diesen stellt ®Arkofix NEC plus conc. ein besonders geeignetes Produkt dar.

Der erfindungsgemäße Dispersionsklebstoff enthält neben der Kunststoffdispersion und dem Vernetzungsmittel noch Vernetzungskatalysatoren. Dabei kann es sich um freie Säuren, oder bevorzugt um saure Metallsalze handeln. Es eignen sich hierzu Salze mit mehrwertigen komplexierbaren Kationen, wie sie beispielsweise in DE-B-22 61 402, DE-C-26 20 738 und DE-A-39 42 628 aufgeführt sind.

Verwendet werden vorzugsweise die wasserlöslichen Metallsalze des AI(III) oder Zr(IV), insbesondere Aluminiumchlorid, Aluminiumnitrat, Zirkonoxychlorid und/oder Zirkoniumnitrat.

Die Menge dieser Vernetzungskatalysatoren beträgt typischerweise 0,05 bis 10 Gew. %, vorzugsweise 0,1 bis 8 Gew. %, bezogen auf die Menge des Dispersionskiebstoffs.

Zur Verbesserung der Wasserfestigkeit können zusätzlich weitere Salze oder Additive, wie beispielsweise Magnesiumchlorid, organische und/oder anorganische Säuren, wie Citronensäure, Glykolsäure oder sauer reagierende anorganische Salze, z. B. Natriumtetrafluoroborat, mitverwendet werden.

Die Menge dieser weiteren Salze oder Additive beträgt typischerweise 0,05 bis 10 Gew. %, vorzugsweise 0,1 bis 5 Gew. %, bezogen auf die Menge des Dispersionsklebstoffs.

Der zur Vernetzung optimale pH-Bereich liegt vorzugsweise zwischen 2 und 6, insbesondere zwischen 2,5 und 4. Ein geeigneter pH-Wert kann schon nach der Emulsionspolymerisation erreicht sein oder er kann, wie bevorzugt, durch Zugabe der obengenannten sauren Verbindungen nachträglich eingestellt werden.

Die wässrige Kunststoffdispersion kann weitere übliche Additive enthalten, beispielsweise Filmbildehilfsmittel zur Erniedrigung der Mindestfilmbildetemperatur (MFT), Weichmacher, Entschäumer, Füllstoffe und Konservierungsmittel.

Der Feststoffgehalt des erfindungsgemäßen wässrigen Dispersionsklebstoffs beträgt vorzugsweise 20 bis 65 Gew. %, insbesondere 30 bis 63 Gew. %.

Eine bevorzugte Ausführungsform des erfindungsgemäßen wässrigen Dispersionsklebstoffs enthält
a) ein Copolymer auf Basis eines oder mehrerer Poly(vinylester), vorzugsweise auf Basis von Poly(vinylacetat), wobei der Poly(vinylester) zusätzlich 0,01 - 1,5 % Gew.- %, vorzugsweise 0,01-1 %, bezogen auf die Gesamtmenge aller Monomeren, ein oder mehrere vernetzbare N-Methylolgruppen enthaltende Comonomereinheiten, vorzugsweise abgeleitet von N-Methylol(meth)-acrylamid, aufweist,
b) 1 - 20 Gew.-%, bezogen auf die Gesamtmenge aller Monomeren, mindestens eines Schutzkolloids, vorzugsweise Poly(vinylalkohol),
c) 0,001 bis 1 Gew.-%, bezogen auf die Menge der Kunststoffdispersion, wenigstens ein zumindest mit ein oder mehreren Alkanolen teilverethertes Derivat aus der Gruppe der hydroxymethylierten cyclischen Ethylenharnstoffe, der hydroxymethylierten cyclischen Propylenharnstoffe, der hydroxymethylierten bicyclischen Glyoxaldiharnstoffe oder der hydroxymethylierten bicyclischen Malondialdehyddiharnstoffe, und
d) mindestens ein saures Metallsalz und/oder eine Säure in ausreichender Menge zur Einstellung eines pH-Wertes von 2-6, vorzugsweise von 2,5 bis 4.

Eine weitere bevorzugte Ausführungsform des erfindungsgemäßen wässrigen Dispersionsklebstoffs enthält
e) ein Copolymer auf Basis eines oder mehrerer Polyvinylester, vorzugsweise auf Basis von Polyvinylacetat, das zusätzlich 0,01 - 1,5 % Gew.- %, vorzugsweise 0,01 - 1 %, bezogen auf die Gesamtmenge aller Monomeren, ein oder mehrere vernetzbare N-Methylolgruppen enthaltende Comonomereinheiten, vorzugsweise abgeleitet von N-Methylol(meth)-acrylamid, enthält sowie 0,01 - 3,0 % Gew.-%, bezogen auf die Gesamtmenge aller Monomeren, ein oder mehrere weitere funktionelle Comonomereinheiten, abgeleitet von veretherten N-Methylolmonomeren, ungesättigten Carbonsäuren und/oder OH-funktionellen Estern ungesättigter Carbonsäuren
f) 1 - 20 Gew.-%, bezogen auf die Gesamtmenge aller Monomere, mindestens eines Schutzkolloids, vorzugsweise Polyvinylalkohol,
g) 0,001 bis 1 Gew.-%, bezogen auf die Menge des wässrigen Dispersionsklebstoffs, wenigstens eines zumindest teilveretherten Derivates aus der Gruppe der hydroxymethylierten cyclischen Ethylenharnstoffe, der hydroxymethylierten cyclischen Propylenharnstoffe, der hydroxymethylierten bicyclischen Glyoxaldiharnstoffe oder der hydroxymethylierten bicyclischen Malondialdehyddiharnstoffe, und
h) mindestens ein saures Metallsalz und/oder eine Säure in ausreichender Menge zur Einstellung eines pH-Wertes von 2-6, vorzugsweise von 2,5 bis 4.

Eine weitere bevorzugte Ausführungsform des erfindungsgemäßen wässrigen Dispersionsklebstoffs enthält 0,001 bis 1 Gew.-%, bezogen auf die Menge des wässrigen Dispersionsklebstoffs, wenigstens ein zumindest teilverethertes, vorzugweise unsymmetrisch teilverethertes Derivat aus der Gruppe der hydroxymethylierten cyclischen Ethylenharnstoffe, der hydroxymethylierten cyclischen Propylenharnstoffe, der hydroxymethylierten bicyclischen Glyoxaldiharnstoffe oder der hydroxymethylierten bicyclischen Malondialdehyddiharnstoffe.

Gegenstand der vorliegenden Erfindung ist auch ein Verfahren zur Herstellung des erfindungsgemäßen wässrigen Dispersionsklebstoffs.

Die Herstellung der wässrigen Kunststoffdispersion erfolgt nach dem Emulsionspolymerisationsverfahren in an sich bekannter Weise, wobei die Polymerisationstemperatur im allgemeinen 40°C bis 100°C, vorzugsweise 60°C bis 90°C, insbesondere 62 °C -85 °C beträgt.

Die Initiierung der Polymerisation erfolgt mit den für die Emulsionspolymerisation gebräuchlichen Initiatoren oder Redox-Initiator-Kombinationen, beispielsweise Hydroperoxiden, wie tert.-Butylhydroperoxid, Azoverbindungen, wie Azobisisobutyronitril, anorganischen Initiatoren, wie die Natrium-, Kalium- und Ammoniumsalzen der Peroxodischwefelsäure. Die genannten Initiatoren werden im allgemeinen in einer Menge von 0,05 bis 3,5 Gew.-%, bezogen auf das Gesamtgewicht der Monomeren, eingesetzt.

Als Redox-Initiatoren verwendet man gegebenenfalls Kombinationen aus den genannten Initiatoren in Kombination mit Reduktionsmitteln wie Natriumsulfit, Natriumhydroxymethansulfinat oder Ascorbinsäure. Die Reduktionsmittelmenge beträgt vorzugsweise 0,01 bis 5,0 Gew.-%, bezogen auf das Gesamtgewicht der Monomere.

Die Stabilisierung des Polymerisationsansatzes erfolgt überwiegend mittels der genannten Schutzkolloide, gegebenenfalls unter Verwendung, vorzugsweise ohne Verwendung, von zusätzlichen Emulgatoren.

Vorzugsweise wird der Schutzkolloid-Anteil und gegebenenfalls Emulgatoranteil dabei teilweise vorgelegt. Die Schutzkolloide und gegebenenfalls Emulgatoren können jedoch auch vor, während oder nach der Polymerisation zugegeben werden.

Die Monomere können insgesamt vorgelegt werden, insgesamt zudosiert werden oder in Anteilen vorgelegt werden und der Rest nach der initiierung der Polymerisation zudosiert werden.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Nach Abschluss der Polymerisation und gegebenenfalls Entmonomerisierung wird dieser Dispersion dann gegebenenfalls mindestens ein saures Metallsalz und/oder eine Säure in ausreichender Menge zur Einstellung des geeigneten pH-Wertes sowie wenigstens ein mit Alkanolen teil- oder vollverethertes Derivat aus der Gruppe der hydroxymethylierten cyclischen Ethylenharnstoffe, der hydroxymethylierten cyclischen Propylenharnstoffe, der hydroxymethylierten bicyclischen Glyoxaldiharnstoffe oder der hydroxymethylierten bicyclischen Malondialdehyddiharnstoffe zugesetzt.

Der Kunststoffdispersion werden bei der Konfektionierung gegebenenfalls weitere Additive zugesetzt, beispielsweise Filmbildehilfsmittel zur MFT-Erniedrigung, Weichmacher, Entschäumer, Füllstoffe und Konservierungsmittel. Innerhalb des Rahmens dieser Erfindung sind beliebige Kombinationen hinsichtlich der Reihenfolge der Zugaben zulässig.

Die Erfindung betrifft daher ein Verfahren zur Herstellung der oben beschriebenen wässrigen Dispersionsklebstoffe umfassend die Schritte
i) wässrige Emulsionspolymerisation von radikalisch polymerisierbaren Monomeren, von denen mindestens eines vernetzbare N-Methylolgruppen aufweist und in einer Menge von bis zu 2,0 Gew. %, bezogen auf die Gesamtmonomermenge, vorliegt in Gegenwart eines Schutzkolloids in an sich bekannter Weise, und
ii) Zugabe mindestens eines Vernetzungsmittels enthaltend teilweise oder vollständig mit einem oder mehreren Alkanolen veresterte N-Methylolgruppen und/oder teilweise oder vollständig mit einem oder mehreren Alkanolen veresterte andere Hydroxylgruppen und das ausgewählt wird aus der Gruppe bestehend aus hydroxymethylierten cyclischen Ethylenharnstoffen, hydroxymethylierten cyclischen Propylen harnstoffen, hydroxymethylierten bicyclischen Glyoxaldiharnstoffen, hydroxymethylierten bicyclischen Malondialdehyddi-harnstoffen oder von deren Kombinationen nach der Herstellung des wässrigen Emulsionspolymerisats.

Die erfindungsgemäßen wässrigen Dispersionsklebstoffe besitzen einen reduzierten Gehalt an einpolymerisierten N-Methylolverbindungen und sind technisch somit mit geringeren Handhabungskosten herstellbar. Dennoch weisen sie gegenüber den herkömmlichen Klebstoffen eine vergleichbare oder verbesserte Kalt-Wasserbeständigkeit bei einem vergleichbaren oder verringerten Formaldehydanteil auf. Sie genügen damit gemäß der Prüfnorm DIN EN 204 wenigstens der Beanspruchungsgruppe D3, wobei die Mindestforderung von 2 N/mm² häufig noch deutlich übertroffen wird, vorzugsweise um mindestens 50 %.

Die erfindungsgemäßen Dispersionsklebstoffe können in an sich bekannter Weise durch Auftragen auf mindestens eine Oberfläche der zu verklebenden Substrate und Zusammenfügen derselben verarbeitet werden.

Gegenstand der Erfindung ist weiterhin die Verwendung des erfindungsgemäßen Dispersionsklebstoffs zum Verkleben von Substraten, vorzugsweise von porösen und semiporösen Substraten.

Die spezielle Eignung des erfindungsgemäßen Dispersionsklebstoffs liegt in der Anwendung als kaltwasserresistenter Klebstoff, insbesondere für cellulosische Substrate wie Holz.

Die Klebstoffe eignen sich für den Do-it-yourself-Bereich oder als Industrieklebstoffe für die maschinelle Leimung sowie insbesondere auch für Anwendungen, in denen die Klebfugen durch hochfrequente Wechselströme gehärtet werden.

Besonders geeignet sind sie in Anforderungen, bei denen kaltwasserbeständige Klebstoffe mit höherem Anforderungsprofil verwendet werden müssen.

Weitere generelle Anwendungsbeispiele sind die Herstellung von wasserfesten Verklebungen von Papier, Pappe, Wellpappe, Schaumstoff, Zement, Leder, Textil oder Pressschichtstoffen.

Andere Anwendungen liegen in Klebstoffen für den Baubereich als Fußboden-, Wand- oder Deckenklebstoff oder als Möbelfolien- oder Teppichrückenkleber.

Weitere Eignungsgebiete liegen in wasserfesten Bindemitteln für Holzfaserplatten oder Faserleder sowie Bindemittel für Dämm-Materialien aus Papier- oder Kunststoff-Fasern, ferner in wasserresistenten Baustoffdispersionen als Bindemittel für Putz oder Zement.

Ein weiteres Einsatzgebiet besteht als Bindemittel für textile Flächengebilde und Non-Wovens sowie im Textildruck und als Textilappretur.

### Beispiele

Die nachfolgenden Beispiele dienen der Erläuterung der Erfindung. Die in den Beispielen angegebenen Teile und Prozente beziehen sich auf das Gewicht, soweit nicht anders vermerkt.

### Herstellung von Kunststoffdispersionen für Beispiele 1-8 sowie Vergleichsbeispiele V1-V4

Die Versuchsapparatur bestand aus einem zylindrischen 31-Glasrührkesselreaktor mit Ankerrührer (130 U/Min.), der mit Zudosiergefäßen, Rückflusskühler, Mantelheizung und -kühlung, sowie Temperaturregel- und -messeinheit ausgestattet war. Aus 93 Teilen (bzw. 94,5 Teilen bei den Dispersionen A und C) entionisiertem Wasser, 7,2 Teilen eines teilverseiften Polyvinylalkohols vom Hydrolysegrad 88 Mol % und einer Höppler-Viskosität der 4 %igen wässrigen Lösung (bei 20°C) von 18 mPa*s, 1,8 Teilen eines teilverseiften Polyvinylalkohols vom Hydrolysegrad 88 Mol-% und einer Höppler-Viskosität der 4 % igen wässrigen Lösung (bei 20°C) von 40 mPa*s und 0,05 Teilen wasserfreiem Natriumacetat wurde zunächst eine Polymerisationsflotte hergestellt. Dieser wurden vor dem Reaktionsstart noch 0,12 Teile Entschäumungsmittel ®Agitan 301 (Münzing-Chemie) und 0,035 Teile Natriumbicarbonat zugesetzt. Die Innentemperatur wurde auf 65 °C angehoben und die Polymerisation mit dem Zusatz von 7,2 Teilen Vinylacetat und 0,02 Teilen Ammoniumperoxodisulfat in 0,15 Teilen Wasser gestartet.

Nach dem Anspringen der Reaktion wurden drei Zuläufe gestartet. Der erste Zulauf bestand aus dem Rest der in der Tabelle 1 angegebenen Gesamtmenge Vinylacetat und enthielt gegebenenfalls noch (bei den Dispersionen C, D und G ) die ebenfalls in der Tabelle 1 angegebene Menge Isobutoxymethylacrylamid (IBMA). Der zweite Zulauf bestand aus einer wässrigen Lösung von N-Methylolacrylamid (NMA). Diese Lösung wurde aus einer handelsüblichen 48 % igen Lösung des Monomeren hergestellt durch Verdünnen mit entionisiertem Wasser (siehe Angaben der Tabelle 1). Der dritte Zulauf bestand aus einer Lösung von 0,03 Teilen Ammoniumperoxodisulfat in 8 Teilen entionisiertem Wasser. Die Zuläufe wurden gleichzeitig parallel über 3,5 Stunden dosiert. Die Polymerisationstemperatur betrug 80 +/- 2 °C. Anschließend wurde bei 80 °C mit einer nachträglichen Zugabe von 0,01 Teilen Ammoniumperoxodisulfat in 0,03 Teilen Wasser sowie bei 50 °C mit Zusätzen wässriger Lösungen von je 0,05 Teilen tert.-Butylhydroperoxid und Natriumpyrosulfit in je 0,15 Teilen Wasser nachpolymerisiert. Die Feststoffgehalte der Dispersionen lagen bei 50,2 % +/- 0,2 % und die Restvinylacetatgehalte unter 3000 ppm.

**Tabelle 1**

| Dispersion | A | B | C | D | E | F | G | H | I | J |
|---|---|---|---|---|---|---|---|---|---|---|
| Teile Vinylacetat | 99,90 | 99,25 | 98,90 | 98,75 | 99,50 | 99,75 | 99,25 | 99,00 | 98,00 | 98,50 |
| Teile NMA | 0,1 | 0,75 | 0,1 | 0,25 | 0,5 | 0,25 | 0,25 | 1,00 | 2 | 1,5 |
| Teile Wasser für NMA-Zulauf | 4,5 | 6 | 4,5 | 6 | 6 | 6 | 6 | 6 | 6 | 6 |
| Teile IBMA | 0 | 0 | 1 | 1 | 0 | 0 | 0,5 | 0 | 0 | 0 |

### Beispiele 1 bis 8 und Vergleichsbeispiele V1 bis V4

100 Teile der Kunststoffdispersionen wurden zunächst mit 2 Teilen Butyldiglykolacetat (als Filmbildner) sowie 3 Teilen einer 54 % igen Lösung von Aluminiumchlorid-Hexahydrat als saurem Vernetzungskatalysator versetzt. Der pH-Wert der Dispersionen betrug 2,8 ± 0,1.

Anschließend wurden der formulierten Dispersion in den erfindungsgemäßen Beispielen 1-8 gemäß den Angaben der Tabelle 2 die dort aufgeführten Mengen ®Arkofix NEC PLUS conc. bzw. im Vergleichsbeispiel V4 ®Arkofix NG conc. (beides Handelsprodukte der Firma Clariant GmbH) zugesetzt. Die Prozentangaben bezogen sich auf die bereits Filmbildner und saures Metallsalz enthaltende Dispersion. Bei ®Arkofix NEC PLUS conc. handelt es sich um einen unsymmetrischen Mischether von Methanol und Diethylenglykol auf Basis von N,N'-Dimethyloldihydroxyethylenharnstoff (DMDHEU). Bei dem zu Vergleichszwecken mitausgeprüftem Vernetzer ®Arkofix NG conc. handelt es sich dagegen um nicht verethertes DMDHEU.

An den Klebstoffen wurden die Nassklebefestigkeiten an Buchenholzprüflingen nach 4-tägiger Kaltwasserbehandlung gemäß der Prüfnorm DIN EN 204/D3 ermittelt..

Die Herstellung der Prüfkörper erfolgte nach der Vorgehensweise der DIN EN 205. Die Verleimung und Prüfung wurde unter Berücksichtigung folgender Kenndaten durchgeführt:

| | |
|---|---|
| Leimauftrag: | 150 ± 20 g/m² beidseitiger Auftrag |
| Offene Wartezeit: | 3 Minuten |
| Geschlossene Wartezeit: | 3 Minuten |
| Preßzeit: | 2 Stunden |
| Preßdruck: | 0,7 ± 0,1 N/mm² |
| Anzahl Prüfkörper pro Prüffolge | 10 |
| Prüfung nach | 7 Tage Normalklima*) |
| Lagerungsfolge gemäß DIN EN 204 D3/3: | 4 Tage in kaltem Wasser (20 +/- 5 °C) |
| Prüftemperatur: | 23 °C ± 2 °C |
| Vorschubgeschwindigkeit: | 50 mm/Min. |

| | |
|---|---|
| *) 23 ± 2 °C und 50 ± 5 % relative Luftfeuchte | |

(Die Einordnung in die Beanspruchungsgruppe D3/3 erfolgte bei einer Reißfestigkeit von >= 2 N/mm²)

Die erhaltenen Ergebnisse sind in Tabelle 2 aufgeführt. Diese enthält zusätzlich noch Angaben über die Viskosität der Dispersionen (Brookfield-Viskosimeter bei 23 °C Prüftemperatur, Meßsystem RVT, Spindel 6 (im Bereich bis 50 Pa*s) oder Spindel 7 (Bereich von 50 bis 200 Pa*s) sowie die Viskosität nach einer 10tägigen Lagerung bei 50 °C.

**Tabelle 2**

| Beispiel | Hergestellt aus Dispersion | Comonomer 1 | Comonomer 2 | Teile Vernetzerharz | Viskosität Pa*s | Viskosität Pa*s nach 10 d 50 °C | D3/3 N/mm² |
|---|---|---|---|---|---|---|---|
| 1 | A | 0,1 % NMA | - | 0,50 Arkofix NEC | 20,05 | 62,40 | 3,5 |
| 2 | B | 0,75 % NMA | - | 0,25 Arkofix NEC | 18,55 | 72,80 | 4,0 |
| 3 | C | 0,1 % NMA | 1 % IBMA | 0,25 Arkofix NEC | 24,10 | 49,80 | 3,7 |
| 4 | D | 0,25 % NMA | 1 % IBMA | 0,25 Arkofix NEC | 21,75 | 101,60 | 3,5 |
| 5 | E | 0,5 % NMA | - | 0,25 Arkofix NEC | 20,45 | 50,80 | 3,5 |
| 6 | F | 0,25 % NMA | - | 0,25 Arkofix NEC | 20,15 | 54,00 | 3,3 |
| 7 | G | 0,25 % NMA | 0,5 % IBMA | 0,25 Arkofix NEC | 20,35 | 66,40 | 3,2 |
| 8 | H | 1 % NMA | - | 0,25 Arkofix NEC | 21,00 | 103,40 | 3,5 |
| V1 | I | 2 % NMA | - | - | 33,90 | 1) | 4,0 |
| V2 | J | 1,5 % NMA | - | - | 28,20 | 1) | 4,0 |
| V3 | B | 0,75 % NMA | - | - | 29,35 | 70,20 | 2,9 |
| V4 | H | 1 % NMA | - | 0,25 Arkofix NG | 23,45 | 1) | 6,2 |

| | | | | | | | |
|---|---|---|---|---|---|---|---|
| 1) Messung aufgrund vollständiger Probenvernetzung nicht mehr möglich. | | | | | | | |

Mit den erfindungsgemäßen Beispielen konnten Produkte erhalten werden, welche die Mindestnorm der Nassklebfestigkeit von 2 N/mm² um mindestens 50 % überschritten. Dies wird vorteilhafter Weise bei einem gleichzeitig gegenüber den Vergleichsbeispielen V1, V2 und V4 reduzierten Anteil an einpolymerisierten N-Methylolmonomeren erreicht. Der direkte Vergleich des Vergleichsbeispiels V3, welches 0,75 % NMA enthielt und mit 2,9 N/mm² unterhalb der Grenze der gestellten Forderung lag, mit Beispiel 2 zeigt, dass bei gleicher NMA-Menge durch den Zusatz von Arkofix NEC PLUS conc. eine deutlich verbesserte Nassklebfestigkeit resultierte.

Das Vergleichsbeispiel V4, in dem nichtverethertes DMDHEU eingesetzt wurde, wies aufgrund der hohen Reaktivität zwar entsprechend hohe Klebefestigkeiten auf, führte jedoch im Vergleich zu Beispiel 8, welches dabei den gleichen Anteil an einpolymerisierbaren N-Methylolmonomeren enthielt, nicht zu einem lagerstabilen Produkt.

## Patentansprüche

1. Wässriger Dispersionsklebstoff auf Basis einer Kunststoffdispersion enthaltend mindestens ein Emulsionspolymerisat mit vernetzbaren N-Methylolgruppen, abgeleitet durch den Einbau von bis zu 2,0 Gew. %, bezogen auf die Gesamtmonomermenge, an N-Methylolgruppenhaltigen Comonomeren in das Emulsionspolymerisat, mindestens ein Schutzkolloid, sowie mindestens ein Vernetzungsmittel enthaltend teilweise oder vollständig mit einem oder mehreren Alkanolen veretherte N-Methylolgruppen und/oder teilweise oder vollständig mit einem oder mehreren Alkanolen veretherte andere Hydroxylgruppen, das ausgewählt wird aus der Gruppe bestehend aus hydroxymethylierten cyclischen Ethylenharnstoffen, hydroxymethylierten cyclischen Propylenharnstoffen, hydroxymethylierten bicyclischen Glyoxaldiharnstoffen, hydroxymethylierten bicyclischen Malondialdehyddiharnstoffen oder deren Kombinationen.

2. Wässriger Dispersionsklebstoff nach Anspruch 1, **dadurch gekennzeichnet, dass** ein Emulsionspolymerisat eingesetzt wird, das vernetzbare N-Methylolgruppen, abgeleitet durch den Einbau von 0,01 bis 1,5 Gew. %, bezogen auf die Gesamtmonomermenge, von N-Methylolgruppenhaltigen Comonomeren enthält.

3. Wässriger Dispersionsklebstoff nach Anspruch 2, **dadurch gekennzeichnet, dass** ein Emulsionspolymerisat eingesetzt wird, das vernetzbare N-Methylolgruppen, abgeleitet durch den Einbau von 0,05 bis 0,8 Gew. %, bezogen auf die Gesamtmonomermenge, von N-Methylolgruppenhaltigen Comonomeren enthält.

4. Wässriger Dispersionsklebstoff nach Anspruch 1, **dadurch gekennzeichnet, dass** ein Emulsionspolymerisat eingesetzt wird, das überwiegend auf Basis von Vinylestern als Hauptmonomerbasis aufgebaut ist und das zumindest bis zu 2,0 Gew.-%, bezogen auf die Gesamtmonomermenge, von Comonomeren mit vernetzbaren N-Methylolgruppen abgeleitet ist.

5. Wässriger Dispersionsklebstoff nach Anspruch 4, **dadurch gekennzeichnet, dass** die Vinylester ausgewählt werden aus der Gruppe bestehend aus Vinylformiat, Vinylacetat, Vinylpropionat, Vinylisobutyrat, Vinylpivalat, Vinyl-2-ethylhexanoat, Vinylestern von gesättigten verzweigten Monocarbonsäuren mit 9 bis 11 Kohlenstoffatomen im Säurerest, Vinylestern von längerkettigen gesättigten oder ungesättigten Fettsäuren, sowie Vinylestern der Benzoesäure und substituierter Derivate der Benzoesäure und dass der Anteil der Vinylester an der Gesamtmonomermenge im Copolymerisat mindestens 50 Gew.-% beträgt.

6. Wässriger Dispersionsklebstoff nach Anspruch 1, **dadurch gekennzeichnet, dass** ein Emulsionspolymerisat eingesetzt wird, dass die N-Methylolgruppenhaltigen Comonomeren ausgewählt werden aus der Gruppe bestehend aus N-Methylolacrylamid, N-Methylolmethacrylamid, N-Methylolallylcarbamat, N-Methylolmaleinamid, N-Methylolmaleamsäure sowie der N-Methylolamide aromatischer Vinylcarbonsäuren, und dass der Anteil dieser Comonomeren an der Gesamtmonomermenge 0,01 bis 1,5 Gew.-% beträgt.

7. Wässriger Dispersionsklebstoff nach Anspruch 4, **dadurch gekennzeichnet, dass** ein Emulsionspolymerisat eingesetzt wird, das sich neben Monomeren auf Basis von Vinylestern und Comonomeren mit vernetzbaren N-Methylolgruppen von mindestens einem weiteren Comonomeren ausgewählt aus der Gruppe bestehend aus stickstoffhaltigen mit Vinylestern polymerisierbaren Comonomeren mit N-funktionellen Gruppen, α,β-ungesättigten Monocabonsäuren und deren Estern mit primären und sekundären gesättigten einwertigen Alkoholen mit 1 bis 32 Kohlenstoffatomen, cycloaliphatischen oder polycyclischen Alkoholen sowie längerkettigen Fettalkoholen, α,β-ungesättigten Dicarbonsäuren, sowie deren Mono- oder Diestern mit gesättigten einwertigen aliphatischen Alkoholen mit 1 bis 28 Kohlenstoffatomen, ethylenisch ungesättigten Kohlenwasserstoffen, vinylaromatischen Kohlenwasserstoffen, halogenierten ungesättigten aliphatischen Kohlenwasserstoffen, mehrfach ethylenisch ungesättigten Comonomeren, hydroxyfunktionellen Estern ungesättigter Carbonsäuren, über Carbonylgruppen vernetzbaren oder selbstvernetzenden Comonomeren aus der Gruppe Diacetonacrylamid, Allylacetoacetat, Vinylacetoacetat sowie Acetoacetoxyethyl(meth)acrylat, der ungesättigten Sulfonsäuren und/oder deren Salzen, der epoxidfunktionellen Comonomeren und/oder der siliciumfunktionellen Comonomeren ableitet.

8. Wässriger Dispersionsklebstoff nach Anspruch 1, **dadurch gekennzeichnet, dass** ein Emulsionspolymerisat eingesetzt wird, das ein Copolymer ist, das sich von Vinylaromaten und 1,3-Dienen ableitet und das darüber hinaus mit vernetzbare N-Methylolgruppen enthaltenden Monomeren modifiziert ist.

9. Wässriger Dispersionsklebstoff nach Anspruch 7, **dadurch gekennzeichnet, dass** der Vinylaromat ausgewählt wird aus der Gruppe bestehend aus Styrol, α-Methylstyrol, Vinyltoluol und/oder Vinylxylol und dass das 1,3-Dien ausgewählt wird aus der Gruppe bestehend aus 1,3-Butadien und/oder Isopren.

10. Wässriger Dispersionsklebstoff nach Anspruch 1, **dadurch gekennzeichnet, dass** das Schutzkolloid ausgewählt wird aus der Gruppe bestehend aus Polyvinylalkohol, den Copolymeren des Vinylalkohols und gegebenenfalls Vinylacetats mit Ethen, mit Vinylacetoacetat oder Isopropenylalkohol, den Copolymeren des Vinylalkohols mit Carboxylgruppen- oder Alkoxysilangruppenenthaltenden Monomeren, der veretherten Cellulosederivate, dem Polyvinylpyrrolidon, der Polycarbonsäuren, der Copolymeren der Maleinsäure oder des Maleinsäureanhydrids mit ethylenisch ungesättigten Verbindungen, der Polyalkylenglykole, der Alkalimetallsalze von Polyacrylsäuren und Polymethacrylsäuren, der Stärke- und Gelatinederivate, der 2-Acrylamido-2-methylpropansulfonsäure und/oder der 4-Styrolsulfonsäure enthaltenden Copolymerisate und deren Alkalimetallsalzen, sowie der N-Vinylpyrrolidon, N-Vinylcaprolactam, N-Vinylcarbazol, 1-Vinyl-imidazol, 2-Vinylimidazol, 2-Vinylpyridin, 4-Vinylpyridin, Acrylamid, Methacrylamid, amingruppentragende Acrylate, amingruppentragende Methacrylate, Acrylamide und/oder Methacrylamide enthaltenden Homo- und Copolymerisate.

11. Wässriger Dispersionsklebstoff nach Anspruch 10, **dadurch gekennzeichnet, dass** das Schutzkolloid Polyvinylalkohol ist.

12. Wässriger Dispersionsklebstoff nach Anspruch 1, **dadurch gekennzeichnet, dass** das Vernetzungsmittel ausgewählt wird aus der Gruppe der Verbindungen der zyklischen Ethylenharnstoffe der allgemeinen Formel la, 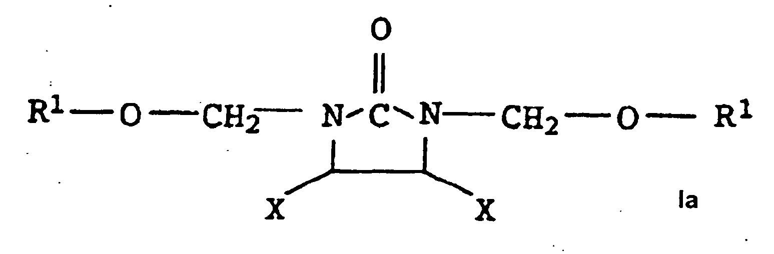 worin die Reste X verschieden oder gleich sind und für Wasserstoff, Hydroxylgruppen oder C₁-C₄-Alkoxygruppen stehen, und/oder
der cyclischen Propylenharnstoffe der allgemeinen Formel Ib, 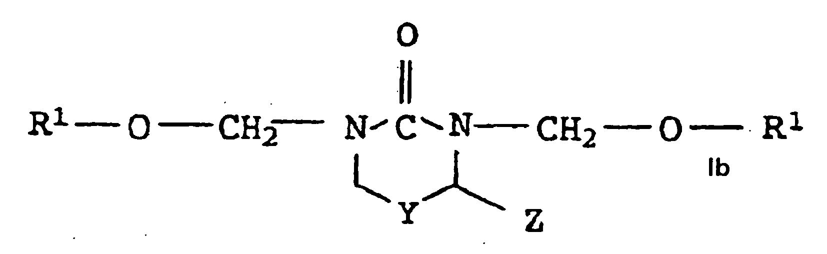 worin Y für CH₂, CHOH, C(CH₃)₂, ein O-Atom oder ein eine C₁-C₄-Alkylgruppe tragendes N-Atom steht und Z Wasserstoff oder eine C₁-C₄-Alkoxygruppe bedeutet, und/oder der bicyclischen Glyoxaldiharnstoffe der allgemeinen Formel Ic, 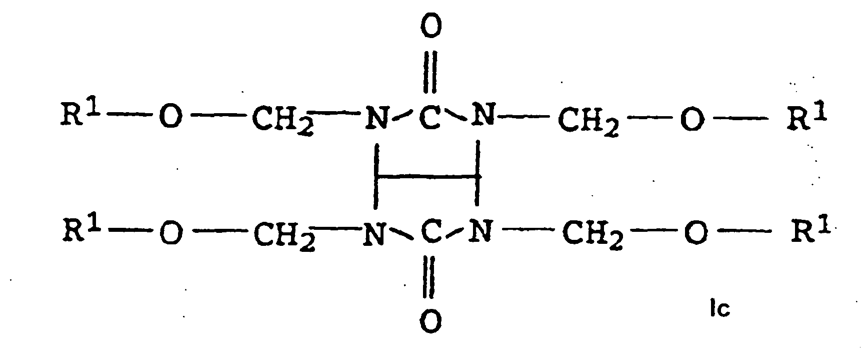 und/oder der bicyclische Malondialdehyddiharnstoffe der allgemeinen Formel Id, 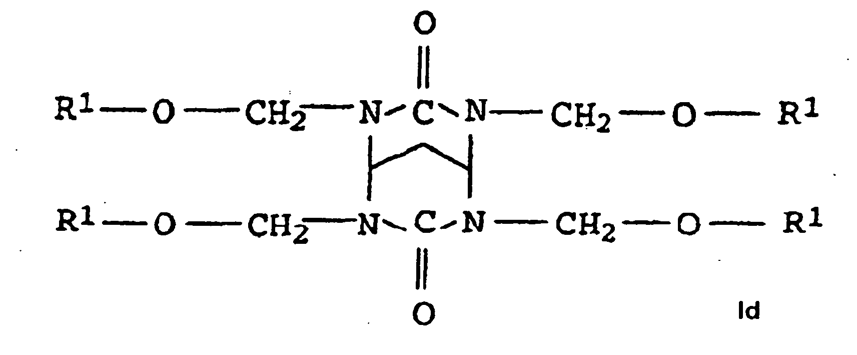 worin für alle Formeln la bis Id der Rest R¹ gleich oder verschieden sein kann und entweder für Wasserstoff oder für eine gegebenenfalls durch nicht benachbarte Sauerstoffatome unterbrochene und gegebenenfalls mit ein oder mehreren Hydroxylgruppen substituierte C₁-C₁₀-Alkylgruppe steht.

13. Wässriger Dispersionsklebstoff nach Anspruch 12, **dadurch gekennzeichnet, dass** das Vernetzungsmittel ein zyklischer Ethylenharnstoff der allgemeinen Formel la ist, das ein zumindest teilverethertes Derivat von 1,3-Dimethylol-4,5-dihydroxyethylen-harnstoff ist, bei dem beide Stickstoffatome des Imidazolidinon-Ringes symmetrisch oder insbesondere unsymmetrisch verethert sind.

14. Wässriger Dispersionsklebstoff nach Anspruch 13, **dadurch gekennzeichnet, dass** die eine der beiden Methylolgruppen des 1,3-Dimethylol-4,5-dihydroxyethylenharnstoffs mit einem Methylrest verethert ist und dass die andere Methylolgruppe durch Umsetzung mit einem Polyol ausgewählt aus der Gruppe umfassend Ethylenglykol, Diethylenglykol, 1,2- und 1,3-Propylenglykol, 1,2-, 1,3- und 1,4-Butylenglykol, Glyzerin und Polyethylenglykolen der Formel HO(CH₂CH₂O)ₙH, worin n eine ganze Zahl zwischen 3 und 20 ist, verethert ist.

15. Wässriger Dispersionsklebstoff nach Anspruch 1, **dadurch gekennzeichnet, dass** dieser einen pH-Bereich zwischen 2,5 und 4 aufweist.

16. Wässrige Dispersionsklebstoff nach Anspruch 1, **dadurch gekennzeichnet, dass** dieser enthält
a) ein Copolymer auf Basis eines oder mehrerer Polyvinylester, wobei der Polyvinylester zusätzlich 0,01 - 1,5 % Gew. %, bezogen auf die Gesamtmenge aller Monomeren, ein oder mehrere vernetzbare N-Methylolgruppen enthaltende Comonomereinheiten aufweist,
b) 1 - 20 Gew. %, bezogen auf die Gesamtmenge aller Monomeren, mindestens eines Schutzkolloids,
c) 0,001 bis 1 Gew. %, bezogen auf die Menge der Kunststoffdispersion, wenigstens eines mit ein oder mehreren Alkanolen teil- oder vollveretherten Derivats aus der Gruppe der hydroxymethylierten cyclischen Ethylenharnstoffe, der hydroxymethylierten cyclischen Propylenharnstoffe, der hydroxymethylierten bicyclischen Glyoxaldiharnstoffe oder der hydroxymethylierten bicyclischen Malondialdehyddiharnstoffe, und
d) mindestens ein saures Metallsalz und/oder eine Säure in ausreichender Menge zur Einstellung eines pH-Wertes von 2 bis 6.

17. Wässriger Dispersionsklebstoff nach Anspruch 1, **dadurch gekennzeichnet, dass** dieser enthält
e) ein Copolymer auf Basis eines oder mehrerer Polyvinylester, das zusätzlich 0,01 - 1,5 % Gew. %, bezogen auf die Gesamtmenge aller Monomeren, ein oder mehrere vernetzbare N-Methylolgruppen enthaltende Comonomereinheiten enthält sowie 0,01 - 3,0 % Gew. %, bezogen auf die Gesamtmenge aller Monomeren, ein oder mehrere weitere funktionelle Comonomereinheiten, abgeleitet von veretherten N-Methylolmonomeren, ungesättigten Carbonsäuren und/oder OH-funktionellen Estern ungesättigter Carbonsäuren,
f) 1 - 20 Gew. %, bezogen auf die Gesamtmenge aller Monomere, mindestens eines Schutzkolloids,
g) 0,001 bis 1 Gew. %, bezogen auf die Menge des wässrigen Dispersionsklebstoffs, wenigstens eines mit ein oder mehreren Alkanolen teil- oder vollveretherten Derivates aus der Gruppe der hydroxymethylierten cyclischen Ethylenharnstoffe, der hydroxymethylierten cyclischen Propylenharnstoffe, der hydroxymethylierten bicyclischen Glyoxaldiharnstoffe oder der hydroxymethylierten bicyclischen Malondialdehyddiharnstoffe, und
h) mindestens ein saures Metallsalz und/oder eine Säure in ausreichender Menge zur Einstellung eines pH-Wertes von 2-6.

18. Wässriger Dispersionsklebstoff nach Anspruch 1, **dadurch gekennzeichnet, dass** der Anteil des Vernetzungsmittels 0,001 bis 1 Gew. %, bezogen auf die Menge des wässrigen Dispersionsklebstoffs, beträgt.

19. Verfahren zur Herstellung des wässrigen Dispersionsklebstoffes nach Anspruch 1 umfassend die Schritte
i) wässrige Emulsionspolymerisation von radikalisch polymerisierbaren Monomeren, von denen mindestens eines vernetzbare N-Methylolgruppen aufweist und in einer Menge von bis zu 2,0 Gew. %, bezogen auf die Gesamtmonomermenge, vorliegt in Gegenwart eines Schutzkolloids in an sich bekannter Weise, und
ii) Zugabe mindestens eines Vernetzungsmittels enthaltend teilweise oder vollständig mit einem oder mehreren Alkanolen veresterte N-Methylolgruppen und das ausgewählt wird aus der Gruppe bestehend aus hydroxymethylierten cyclischen Ethylenharnstoffen, hydroxymethylierten cyclischen Propylenharnstoffen, hydroxymethylierten bicyclischen Glyoxaldi-harnstoffen, hydroxymethylierten bicyclischen Malondialdehyddiharnstoffen oder von deren Kombinationen nach der Herstellung des wässrigen Emulsionspolymerisats.

20. Verwendung des wässrigen Dispersionsklebstoffes nach Anspruch 1 zum Verkleben von porösen und semiporösen Substraten, insbesondere von cellulosischen Substraten.

21. Verwendung nach Anspruch 20, **dadurch gekennzeichnet, dass** die porösen und semiporösen Substrate ausgewählt werden aus der Gruppe bestehend aus Papier, Pappe, Wellpappe, Schaumstoff, Zement, Leder, Textil oder Pressschichtstoffen.

22. Verwendung des wässrigen Dispersionsklebstoffes nach Anspruch 1 als Klebstoff für den Baubereich, vorzugsweise als Fußboden-, Wand- oder Deckenklebstoff oder als Möbelfolien- oder Teppichrückenkleber.

23. Verwendung des wässrigen Dispersionsklebstoffes nach Anspruch 1 als Bindemittel für Holzfaserplatten oder Faserleder, als Bindemittel für Dämm-Materialien aus Papier- oder Kunststoff-Fasern, oder als Bindemittel für Putz oder Zement.

24. Verwendung des wässrigen Dispersionsklebstoffes nach Anspruch 1 als Bindemittel für textile Flächengebilde und Non-Wovens, als Textilappretur oder im Textildruck.

## Claims

1. An aqueous dispersion adhesive based on a polymer dispersion comprising at least one emulsion polymer containing crosslinkable N-methylol groups, derived through the incorporation of up to 2.0% by weight, based on the total monomer amount, of N-methylol-containing comonomers into the emulsion polymer, at least one protective colloid, and at least one crosslinking agent containing N-methylol groups fully or partly etherified with one or more alkanols and/or other hydroxyl groups fully or partly etherified with one or more alkanols, and selected from the group consisting of hydroxymethylated cyclic ethyleneureas, hydroxymethylated cyclic propyleneureas, hydroxymethylated bicyclic glyoxal diureas, hydroxymethylated bicyclic malonaldehyde diureas or combinations thereof.

2. The aqueous dispersion adhesive as claimed in claim 1, wherein an emulsion polymer is used that contains crosslinkable N-methylol groups derived through the incorporation of from 0.01% to 1.5% by weight, based on the total monomer amount, of N-methylol-containing comonomers.

3. The aqueous dispersion adhesive as claimed in claim 2, wherein an emulsion polymer is used that contains crosslinkable N-methylol groups derived through the incorporation of from 0.05% to 0.8% by weight, based on the total monomer amount, of N-methylol-containing comonomers.

4. The aqueous dispersion adhesive as claimed in claim 1, wherein an emulsion polymer is used which is constructed predominantly on the basis of vinyl esters as principal monomer basis and is derived to an extent of at least 2.0% by weight, based on the total monomer amount, from comonomers containing crosslinkable N-methylol groups.

5. The aqueous dispersion adhesive as claimed in claim 4, wherein the vinyl esters are selected from the group consisting of vinyl formate, vinyl acetate, vinyl propionate, vinyl isobutyrate, vinyl pivalate, vinyl 2-ethylhexanoate, vinyl esters of saturated branched monocarboxylic acids having 9 to 11 carbon atoms in the acid residue, vinyl esters of relatively long-chain saturated or unsaturated fatty acids, and vinyl esters of benzoic acid and of substituted derivatives of benzoic acid and wherein the fraction of the vinyl esters as a proportion of the total monomer amount in the copolymer is at least 50% by weight.

6. The aqueous dispersion adhesive as claimed in claim 1, wherein an emulsion polymer is used, wherein the comonomers containing N-methylol groups are selected from the group consisting of N-methylolacrylamide, N-methylolmethacrylamide, N-methylolallylcarbamate, N-methylolmaleamide, N-methylolmaleamic acid, and the N-methylol amides of aromatic vinyl carboxylic acids, and wherein the fraction of these comonomers as a proportion of the total monomer amount is from 0.01 % to 1.5% by weight.

7. The aqueous dispersion adhesive as claimed in claim 4, wherein an emulsion polymer is used which in addition to monomers based on vinyl esters and comonomers containing crosslinkable N-methylol groups is derived from at least one further comonomer selected from the group consisting of nitrogen-containing comonomers polymerizable with vinyl esters and containing N-functional groups, α,β-unsaturated monocarboxylic acids and their esters with primary and secondary saturated monohydric alcohols having 1 to 32 carbon atoms, cycloaliphatic or polycyclic alcohols and also relatively long-chain fatty alcohols, α,β-unsaturated dicarboxylic acids and the monoesters or diesters thereof with saturated monohydric aliphatic alcohols having 1 to 28 carbon atoms, ethylenically unsaturated hydrocarbons, vinylaromatic hydrocarbons, halogenated unsaturated aliphatic hydrocarbons, polyethylenically unsaturated comonomers, hydroxy-functional esters of unsaturated carboxylic acids, comonomers which are self-crosslinking or crosslinkable by way of carbonyl groups, from the group consisting of diacetoneacrylamide, allyl acetoacetate, vinyl acetoacetate and acetoacetoxyethyl (meth)acrylate, unsaturated sulfonic acids and/or salts thereof, epoxy-functional comonomers and/or silicon-functional comonomers.

8. The aqueous dispersion adhesive as claimed in claim 1, wherein an emulsion polymer is used which is a copolymer derived from vinylaromatics and 1,3-dienes and additionally modified with monomers containing crosslinkable N-methylol groups.

9. The aqueous dispersion adhesive as claimed in claim 7, wherein the vinylaromatic is selected from the group consisting of styrene, α-methylstyrene, vinyltoluene and/or vinylxylene and wherein the 1,3-diene is selected from the group consisting of 1,3-butadiene and/or isoprene.

10. The aqueous dispersion adhesive as claimed in claim 1, wherein the protective colloid is selected from the group consisting of polyvinyl alcohol, the copolymers of vinyl alcohol and, if desired, vinyl acetate with ethene, with vinyl acetoacetate or isopropenyl alcohol, the copolymers of vinyl alcohol with monomers containing carboxyl groups or alkoxysilane groups, etherified cellulose derivatives, polyvinylpyrrolidone, polycarboxylic acids, the copolymers of maleic acid or of maleic anhydride with ethylenically unsaturated compounds, polyalkylene glycols, alkali metal salts of polyacrylic acids and polymethacrylic acids, starch derivatives and gelatin derivatives, 2-acrylamido-2-methylpropanesulfonic acid and/or 4-styrenesulfonic acid copolymers and their alkali metal salts, and homopolymers and copolymers of N-vinylpyrrolidone, N-vinylcaprolactam, N-vinylcarbazole, 1-vinylimidazole, 2-vinylimidazole, 2-vinylpyridine, 4-vinylpyridine, acrylamide, methacrylamide, amino-bearing acrylates, amino-bearing methacrylates, acrylamides and/or methacrylamides.

11. The aqueous dispersion adhesive as claimed in claim 10, wherein the protective colloid is polyvinyl alcohol.

12. The aqueous dispersion adhesive as claimed in claim 1, wherein the crosslinking agent is selected from the group of compounds of the cyclic ethyleneureas of the general formula la 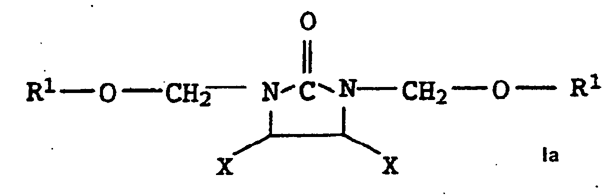 in which the radicals X are identical or different and are hydrogen, hydroxyl groups or C₁-C₄ alkoxy groups, and/or
the cyclic propyleneureas of the general formula Ib 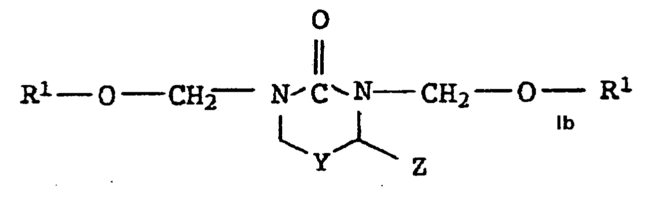 in which Y is CH₂, CHOH, C(CH₃)₂, an oxygen atom or a nitrogen atom that carries a C₁-C₄ alkyl group and Z is hydrogen or a C₁-C₄ alkoxy group, and/or the bicyclic glyoxal diureas of the general formula Ic 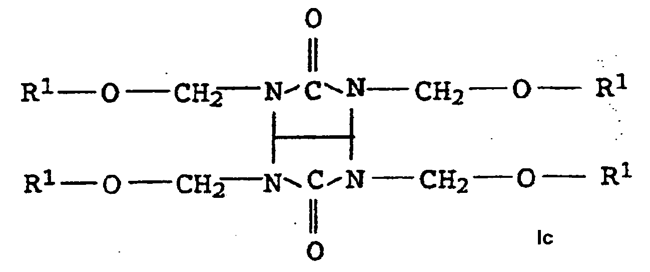 and/or the bicyclic malonaldehyde diureas of the general formula Id 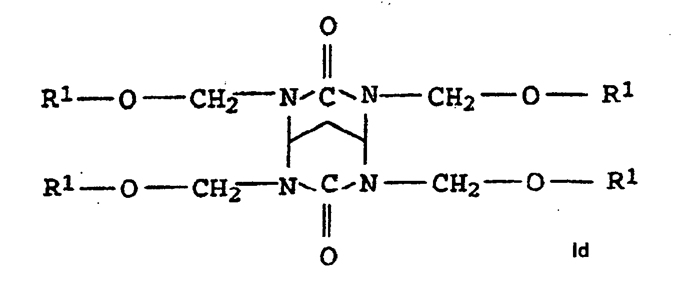 in which in all of formulae la to Id the radical R¹ can be identical or different and is either hydrogen or a C₁-C₁₀ alkyl group which is uninterrupted or interrupted by nonadjacent oxygen atoms and is unsubstituted or substituted by one or more hydroxyl groups.

13. The aqueous dispersion adhesive as claimed in claim 12, wherein the crosslinking agent is a cyclic ethyleneurea of the general formula la which is an at least partly etherified derivative of 1,3-dimethylol-4,5-dihydroxyethyleneurea in which both nitrogen atoms of the imidazolidinone ring are etherified symmetrically or, in particular, asymmetrically.

14. The aqueous dispersion adhesive as claimed in claim 13, wherein one of the two methylol groups of the 1,3-dimethylol-4,5-dihydroxyethyleneurea is etherified with a methyl radical and wherein the other methylol group is etherified by reaction with a polyol selected from the group consisting of ethylene glycol, diethylene glycol, 1,2- and 1,3-propylene glycol, 1,2-, 1,3- and 1,4-butylene glycol, glycerol and polyethylene glycols of the formula HO(CH₂CH₂O)ₙH in which n is an integer between 3 and 20.

15. The aqueous dispersion adhesive as claimed in claim 1, which has a pH range of between 2.5 and 4.

16. The aqueous dispersion adhesive as claimed in claim 1, which comprises
a) a copolymer based on one or more polyvinyl esters, the polyvinyl ester additionally containing 0.01%-1.5% by weight, based on the total amount of all monomers, of one or more crosslinkable comonomer units containing N-methylol groups,
b) 1 %-20% by weight, based on the total amount of all monomers, of at least one protective colloid,
c) from 0.001% to 1% by weight, based on the amount of the polymer dispersion, of at least one derivative partly or fully etherified with one or more alkanols and from the group of hydroxymethylated cyclic ethyleneureas, hydroxymethylated cyclic propyleneureas, hydroxymethylated bicyclic glyoxal diureas or hydroxymethylated bicyclic malonaldehyde diureas, and
d) at least one acidic metal salt and/or an acid in sufficient amount to establish a pH from 2 to 6.

17. The aqueous dispersion adhesive as claimed in claim 1, which comprises
e) a copolymer based on one or more polyvinyl esters, additionally containing 0.01%-1.5% by weight, based on the total amount of all monomers, of one or more comonomer units containing crosslinkable N-methylol groups, and also 0.01%-3.0% by weight, based on the total amount of all monomers, of one or more further functional comonomer units derived from etherified N-methylol monomers, unsaturated carboxylic acids and/or OH-functional esters of unsaturated carboxylic acids,
f) 1 %-20% by weight, based on the total amount of all monomers, of at least one protective colloid,
g) from 0.001% to 1% by weight, based on the amount of the aqueous dispersion adhesive, of at least one derivative partly or fully etherified with one or more alkanols and from the group of hydroxymethylated cyclic ethyleneureas, hydroxymethylated cyclic propyleneureas, hydroxymethylated bicyclic glyoxal diureas or hydroxymethylated bicyclic malonaldehyde diureas, and
h) at least one acidic metal salt and/or an acid in sufficient amount to establish a pH of 2-6.

18. The aqueous dispersion adhesive as claimed in claim 1, wherein the fraction of the crosslinking agent is from 0.001% to 1% by weight, based on the amount of the aqueous dispersion adhesive.

19. A process for preparing the aqueous dispersion adhesive as claimed in claim 1, comprising the steps of
i) carrying out aqueous emulsion polymerization of free-radically polymerizable monomers at least one of which contains crosslinkable N-methylol groups and is in an amount of up to 2.0% by weight, based on the total monomer amount, in the presence of a protective colloid and in conventional manner, and
ii) adding at least one crosslinking agent containing N-methylol groups esterified fully or partly with one or more alkanols and selected from the group consisting of hydroxymethylated cyclic ethyleneureas, hydroxymethylated cyclic propyleneureas, hydroxymethylated bicyclic glyoxal diureas, hydroxymethylated bicyclic malonaldehyde diureas or combinations thereof following the preparation of the aqueous emulsion polymer.

20. The use of the aqueous dispersion adhesive as claimed in claim 1 for adhesively bonding porous and semiporous substrates, particularly cellulosic substrates.

21. The use as claimed in claim 20, wherein the porous and semiporous substrates are selected from the group consisting of paper, cardboard, including corrugated cardboard, foam, cement, leather, textile and compressed laminates.

22. The use of the aqueous dispersion adhesive as claimed in claim 1 as an adhesive for the construction sector, preferably as flooring, wall or ceiling adhesive or as furniture foil adhesive or carpet-backing adhesive.

23. The use of the aqueous dispersion adhesive as claimed in claim 1 as a binder for wood fiberboard or reconstituted leather, as a binder for insulating materials of paper or polymer fibers, or as a binder for plaster or cement.

24. The use of the aqueous dispersion adhesive as claimed in claim 1 as a binder for textile sheet materials and nonwovens, as a textile finish or in textile printing.

## Revendications

1. Adhésif en dispersion aqueuse à base d'une dispersion de polymères contenant au moins un polymérisat en émulsion comportant des groupes N-méthylol réticulables, dérivés de l'incorporation dans le polymérisat en émulsion d'un maximum de 2,0 % en poids de comonomères contenant des groupes N-méthylol, par rapport à la quantité totale de monomères, au moins un colloïde protecteur, ainsi qu'au moins un agent réticulant contenant des groupes N-méthylol éthérifiés partiellement ou totalement par un ou plusieurs alcanols et/ou d'autres groupes hydroxyles éthérifiés partiellement ou totalement par un ou plusieurs alcanols, ledit agent réticulant étant choisi dans le groupe constitué par les éthylène-urées cycliques hydroxyméthylées, les propylène-urées cycliques hydroxyméthylées, les glyoxal-diurées bicycliques hydroxyméthylées, les malonedialdéhyde-diurées bicycliques hydroxyméthylées ou leurs combinaisons.

2. Adhésif en dispersion aqueuse selon la revendication 1, **caractérisé en ce qu'**on utilise un polymérisat en émulsion contenant des groupes N-méthylol réticulables dérivés de l'incorporation de 0,01 à 1,5 % en poids, par rapport à la quantité totale de monomères, de comonomères contenant des groupes N-méthylol.

3. Adhésif en dispersion aqueuse selon la revendication 2, **caractérisé en ce qu'**on utilise un polymérisat en émulsion contenant des groupes N-méthylol réticulables dérivés de l'incorporation de 0,05 à 0,8 % en poids, par rapport à la quantité totale de monomères, de comonomères contenant des groupes N-méthylol.

4. Adhésif en dispersion aqueuse selon la revendication 1, **caractérisé en ce qu'**on utilise un polymérisat en émulsion, dont la base monomère principale est composée majoritairement d'esters de vinyle et qui est dérivé au moins jusqu'à 2,0 % en poids, par rapport à la quantité totale de monomères, de comonomères comportant des groupes N-méthylol réticulables.

5. Adhésif en dispersion aqueuse selon la revendication 4, **caractérisé en ce que** les esters de vinyle sont choisis dans le groupe constitué par le formiate de vinyle, l'acétate de vinyle, le propionate de vinyle, l'isobutyrate de vinyle, le pivalate de vinyle, le 2-éthylhexanoate de vinyle, les esters de vinyle d'acides monocarboxyliques saturés ramifiés comptant 9 à 11 atomes de carbone dans le reste acide, les esters de vinyle d'acides gras à chaîne longue saturés ou insaturés, ainsi que les esters de vinyle de l'acide benzoïque et de dérivés substitués de l'acide benzoïque et **en ce que** la proportion des esters de vinyle par rapport à la quantité totale de monomères dans le copolymérisat est d'au moins 50 % en poids.

6. Adhésif en dispersion aqueuse selon la revendication 1, **caractérisé en ce qu'**on utilise un polymérisat en émulsion, **en ce que** les comonomères contenant des groupes N-méthylol sont choisis dans le groupe constitué par le N-méthylolacrylamide, le N-méthylolméthacrylamide, le N-méthylolallylcarbamate, l'amide N-méthylolmaléique, l'acide N-méthylolmaléamique ainsi que le N-méthylolamide d'acides vinyl carboxyliques aromatiques, et **en ce que** la proportion de ces comonomères par rapport à la quantité totale de monomères est de 0,01 à 1,5 % en poids.

7. Adhésif en dispersion aqueuse selon la revendication 4, **caractérisé en ce qu'**on utilise un polymérisat en émulsion, qui, outre les monomères à base d'esters de vinyle et les comonomères comportant des groupes N-méthylol réticulables, est dérivé d'au moins un autre comonomère choisi dans le groupe constitué par les comonomères azotés qui sont polymérisables avec les esters de vinyle ; les acides monocarboxyliques α,β-insaturés et leurs esters avec des alcools primaires et secondaires monovalents saturés comptant 1 à 32 atomes de carbone, les alcools cycloaliphatiques ou polycycliques ainsi que les alcools gras à chaîne longue ; les acides dicarboxyliques α,β-insaturés, ainsi que les mono- ou diesters avec des alcools aliphatiques saturés monovalents comptant 1 à 28 atomes de carbone, les hydrocarbures éthyléniquement insaturés, les hydrocarbures vinylaromatiques, les hydrocarbures aliphatiques insaturés halogénés, les comonomères éthyléniquement polyinsaturés, les esters hydroxyfonctionnels d'acides carboxyliques insaturés, les comonomères réticulables via des groupes carbonyle, ou autoréticulables, issus du groupe constitué par l'acrylamide de diacétone, l'acétoacétate d'allyle, l'acétoacétate de vinyle ainsi que le (méth)acrylate d'acétoacétoxyéthyle ; les acides sulfoniques insaturés et/ou leurs sels, les comonomères à fonction époxyde et/ou les comonomères à fonction silicium.

8. Adhésif en dispersion aqueuse selon la revendication 1, **caractérisé en ce qu'**on utilise un polymérisat en émulsion consistant en un copolymère dérivé d'aromates vinyliques et de 1,3-diènes et qui est en outre modifié par des monomères contenant des groupes N-méthylol réticulables.

9. Adhésif en dispersion aqueuse selon la revendication 7, **caractérisé en ce que** l'aromate vinylique est choisi dans le groupe constitué par le styrène, l'α-méthylstyrène, le vinyltoluène et/ou le vinylxylène et **en ce que** le 1,3-diène est choisi dans le groupe constitué par le 1,3-butadiène et/ou l'isoprène.

10. Adhésif en dispersion aqueuse selon la revendication 1, **caractérisé en ce que** le colloïde protecteur est choisi dans le groupe constitué par l'alcool polyvinylique, les copolymères de l'alcool vinylique et le cas échéant de l'acétate de vinyle avec l'éthène, avec l'acétoacétate de vinyle ou l'alcool isopropénylique ; les copolymères de l'alcool vinylique avec des monomères contenant des groupes carboxyle ou alcoxysilane ; les dérivés cellulosiques éthérifiés, la polyvinylpyrrolidone, les acides polycarboxyliques, les copolymères de l'acide maléique ou de l'anhydride maléique avec des composés éthyléniquement insaturés ; les polyalkylène glycols, les sels de métaux alcalins d'acides polyacryliques et d'acides polyméthacryliques, les dérivés de l'amidon et de la gélatine, les copolymérisats contenant de l'acide 2-acrylamido-2-méthylpropanesulfonique et/ou de l'acide 4-styrènesulfonique et leurs sels de métaux alcalins, ainsi que la N-vinylpyrrolidone, le N-vinylcaprolactame, le N-vinylcarbazole, le 1-vinylimidazole, le 2-vinylimidazole, la 2-vinylpyridine, la 4-vinylpyridine, l'amide acrylique, l'amide méthacrylique, les acrylates porteurs de groupes amine, les méthacrylates porteurs de groupes amine, les acrylamides et/ou les homo- et copolymérisats contenant des méthacrylamides.

11. Adhésif en dispersion aqueuse selon la revendication 10, **caractérisé en ce que** le colloïde protecteur est l'alcool polyvinylique.

12. Adhésif en dispersion aqueuse selon la revendication 1, **caractérisé en ce que** l'agent réticulant est choisi dans le groupe constitué par les composés d'éthylène-urées cycliques répondant à la formule générale Ia, 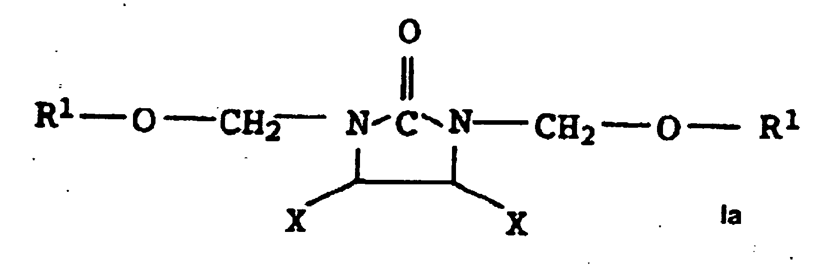 dans laquelle les radicaux X sont identiques ou différents et représentent un atome d'hydrogène, des groupes hydroxyle ou des groupes alcoxy en C₁-C₄, et/ou
les propylène-urées cycliques répondant à la formule générale Ib, 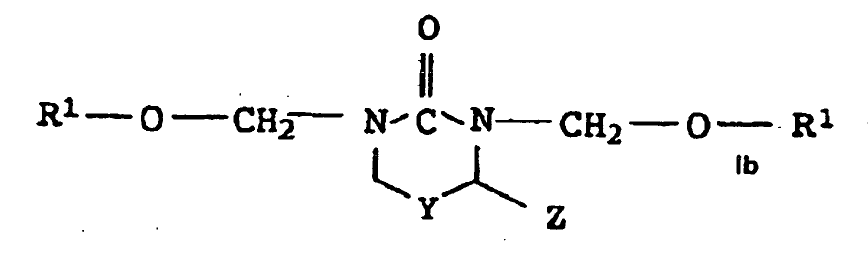 dans laquelle Y représente CH₂, CHOH, C(CH₃)₂, un atome d'oxygène ou un atome d'azote porteur d'un groupe alkyle en C₁-C₄ et Z représente un atome d'hydrogène ou un groupe alcoxy en C₁-C₄, et/ou les glyoxyal-diurées bicycliques répondant à la formule générale Ic, 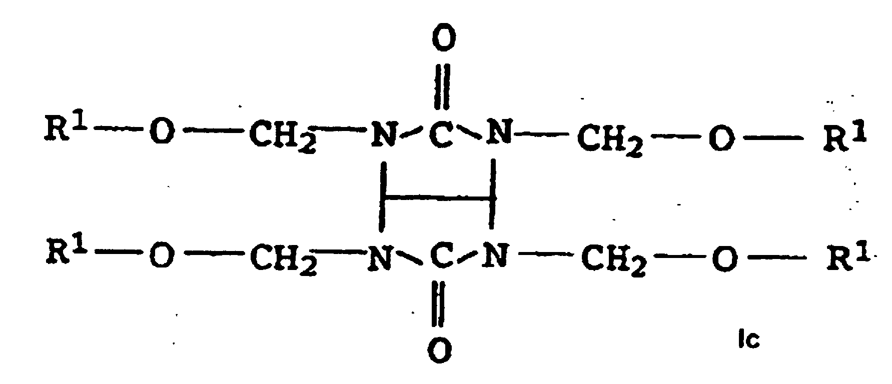 et/ou les malonedialdéhyde-diurées bicycliques répondant à la formule générale Id, 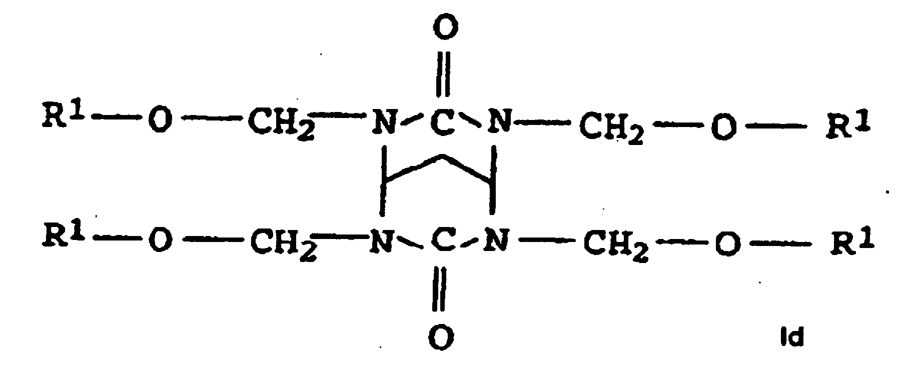 avec pour précision que dans toutes les formules Ia à Id, les radicaux R¹ peuvent être identiques ou différents et représentent soit un atome d'hydrogène, soit un groupe alkyle en C₁-C₁₀ interrompu, le cas échéant, par des atomes d'oxygène non voisins et, le cas échéant, substitué par un ou plusieurs groupes hydroxyle.

13. Adhésif en dispersion aqueuse selon la revendication 12, **caractérisé en ce que** l'agent réticulant est une éthylène-urée cyclique répondant à la formule générale Ia, qui représente un dérivé au moins partiellement éthérifié de 1,3-diméthylol-4,5-dihydroxyéthylène-urée, dans lequel les deux atomes d'azote du cycle imidazolidinone sont éthérifiés de manière symétrique ou, notamment, asymétrique.

14. Adhésif en dispersion aqueuse selon la revendication 13, **caractérisé en ce que** l'un des deux groupes méthylol de la 1,3-diméthylol-4,5-dihydroxyéthylène-urée est éthérifié par un reste méthyle et **en ce que** l'autre groupe méthylol est éthérifié par réaction avec un polyol choisi dans le groupe comprenant l'éthylène glycol, le diéthylène glycol, le 1,2- et 1,3-propylène glycol, le 1,2-, 1,3- et 1,4-butylène glycol, le glycérol et les polyéthylène glycols répondant à la formule HO(CH₂CH₂O)ₙH, dans laquelle n est un nombre entier compris entre 3 et 20.

15. Adhésif en dispersion aqueuse selon la revendication 1, **caractérisé en ce qu'**il présente un pH compris entre 2,5 et 4.

16. Adhésif en dispersion aqueuse selon la revendication 1, **caractérisé en ce qu'**il contient
a) un copolymère à base d'un ou plusieurs esters polyvinyliques, l'ester polyvinylique présentant en outre 0,01 à 1,5 % en poids, par rapport à la quantité totale de l'ensemble des monomères, d'unités comonomères contenant un ou plusieurs groupes N-méthylol réticulables,
b) 1 à 20 % en poids, par rapport à la quantité totale de l'ensemble des monomères, d'au moins un colloïde protecteur,
c) 0,001 à 1 % en poids, par rapport à la quantité de dispersion de polymères, d'au moins un dérivé, éthérifié partiellement ou totalement par un ou plusieurs alcanols, appartenant au groupe constitué par les éthylène-urées cycliques hydroxyméthylées, les propylène-urées cycliques hydroxyméthylées, les glyoxal-diurées bicycliques hydroxyméthylées ou les malonedialdéhyde-diurées bicycliques hydroxyméthylées, et
d) au moins un sel métallique acide et/ou un acide en quantité suffisante pour établir un pH allant de 2 à 6.

17. Adhésif en dispersion aqueuse selon la revendication 1, **caractérisé en ce qu'**il contient
e) un copolymère à base d'un ou plusieurs esters polyvinyliques, contenant en outre 0,01 à 1,5% en poids, par rapport à la quantité totale de l'ensemble des monomères, d'unités comonomères contenant un ou plusieurs groupes N-méthylol réticulables ainsi que 0,01 à 3,0 % en poids, par rapport à la quantité totale de l'ensemble des monomères, d'une ou plusieurs autres unités comonomères fonctionnelles, dérivées de monomères N-méthylol éthérifiés, d'acides carboxyliques insaturés et/ou d'esters hydroxyfonctionnels d'acides carboxyliques insaturés,
f) 1 à 20 % en poids, par rapport à la quantité totale de l'ensemble des monomères, d'au moins un colloïde protecteur,
g) 0,001 à 1 % en poids, par rapport à la quantité d'adhésif en dispersion aqueuse, d'au moins un dérivé, éthérifié partiellement ou totalement par un ou plusieurs alcanols, appartenant au groupe constitué par les éthylène-urées cycliques hydroxyméthylées, les propylène-urées cycliques hydroxyméthylées, les glyoxal-diurées bicycliques hydroxyméthylées ou les malonedialdéhyde-diurées bicycliques hydroxyméthylées, et
h) au moins un sel métallique acide et/ou un acide en quantité suffisante pour établir un pH allant de 2 à 6.

18. Adhésif en dispersion aqueuse selon la revendication 1, **caractérisé en ce que** la proportion de l'agent réticulant est de 0,001 à 1 % en poids, par rapport à la quantité de l'adhésif en dispersion aqueuse.

19. Procédé de production de l'adhésif en dispersion aqueuse selon la revendication 1, comprenant les étapes de
i) polymérisation en émulsion aqueuse de monomères polymérisables par voie radicalaire, parmi lesquels au moins un présente des groupes N-méthylol réticulables en étant présent dans une quantité n'excédant pas 2,0 % en poids par rapport à la quantité totale de monomères, en présence d'un colloïde protecteur, de manière connue en soi, et
ii) addition d'au moins un agent réticulant contenant des groupes N-méthylol estérifiés partiellement ou totalement par un ou plusieurs alcanols et qui est choisi dans le groupe constitué par les éthylène-urées cycliques hydroxyméthylées, les propylène-urées cycliques hydroxyméthylées, les glyoxal-diurées bicycliques hydroxyméthylées, les malonedialdéhyde-diurées bicycliques hydroxyméthylées ou leurs combinaisons, après la production du polymérisat en émulsion aqueuse.

20. Utilisation de l'adhésif en dispersion aqueuse selon la revendication 1 pour le collage de substrats poreux et semi-poreux, notamment de substrats cellulosiques.

21. Utilisation selon la revendication 20, **caractérisé en ce que** les substrats poreux et semi-poreux sont choisis dans le groupe constitué par le papier, le carton, le carton ondulé, les mousses expansées, le ciment, le cuir, les textiles ou les stratifiés densifiés.

22. Utilisation de l'adhésif en dispersion aqueuse selon la revendication 1 comme adhésif destiné au secteur du bâtiment, de préférence comme adhésif pour les sols, les parois murales ou les plafonds ou comme colle pour les films pour l'ameublement ou pour la moquette.

23. Utilisation de l'adhésif en dispersion aqueuse selon la revendication 1 comme liant pour les panneaux de fibres de bois ou le cuir reconstitué, comme liant pour les matériaux d'insonorisation à base de fibres de papier ou de fibres de plastique, ou comme liant pour les enduits ou le ciment.

24. Utilisation de l'adhésif en dispersion aqueuse selon la revendication 1 comme liant pour les structures textiles et les non tissés, comme finissage pour textile ou dans l'impression sur textiles.
